# EUROPÄISCHE PATENTSCHRIFT

(11) **EP 4 248 119 B1**
(45) Veröffentlichungstag und Bekanntmachung des Hinweises auf die Patenterteilung: **11.09.2024**
(21) Anmeldenummer: 20811298.7
(22) Anmeldetag: 20.11.2020
(51) Int. Cl.: F16L 11/133, B63B 22/00, B63B 49/00, B63B 79/15

(54) **SYSTEM ZUR ERMITTLUNG VON PRÄDIKTIONSDATEN**
SYSTEM FOR ASCERTAINING PREDICTION DATA
SYSTÈME DE VÉRIFICATION DE DONNÉES DE PRÉDICTION

(43) Veröffentlichungstag der Anmeldung: 27.09.2023
(73) Patentinhaber: ContiTech Deutschland GmbH, 30175 Hannover (DE)
(72) Erfinder: BISHOP, Simon, 30165 Hannover (DE); STATON, Paul, 30165 Hannover (DE)
(74) Vertreter: Continental Corporation
(86) Internationale Anmeldenummer: PCT/EP2020/082886
(87) Internationale Veröffentlichungsnummer: WO 2022/106024

(56) Entgegenhaltungen:
- EP-A1- 3 604 108
- EP-A2- 2 506 235
- US-A1- 2016 091 318

## Beschreibung

Die Erfindung betrifft ein System zur Ermittlung von Prädiktionsdaten. Das System umfasst mindestens eine Schwimmeinheit. Bei der Schwimmeinheit kann es sich beispielsweise um eine Boje, einen Schwimmschlauch oder aus einem Verbund von der Boje mit dem Schwimmschlauch handeln. Der an die Boje gekoppelte Schwimmschlauch wird in der Praxis verwendet, um die Boje zusammen mit dem Schwimmschlauch im Wasser eines Meeres zu platzieren, wobei die Boje außerdem mit einer Unterwasserleitung gekoppelt ist. Über die Unterwasserleitung kann beispielsweise Erdöl zu der Boje geleitet werden, wobei die Boje ausgebildet ist, das Erdöl von dem Unterwasserschlauch zu dem Schwimmschlauch zu leiten oder umgekehrt. Der Schwimmschlauch kann mit einem ersten Ende an der Boje gekoppelt sein, so dass das Erdöl durch den Schwimmschlauch strömen kann. Ein zweites Ende des Schwimmschlauchs kann mit einem Tankschiff gekoppelt werden, so dass das Erdöl durch den Schwimmschlauch zu dem Tankschiff geleitet werden kann. Wenn das Tankschiff befüllt ist, kann das zweite Ende von dem Tankschiff wieder gelöst werden, so dass das zweite Ende des Schwimmschlauchs frei im Meer schwimmen kann. Bis erneut ein Tankschiff zu dem zweiten Ende des Schwimmschlauchs fährt, kann eine geraume Zeit vergehen. Während dieser Zeit kann der Schwimmschlauch vom Wasser des Meeres angetrieben und/oder durch den Wind gelenkt von dem Ort wegbewegt werden, an dem das zweite Ende des Schwimmschlauchs von dem Tankschiff zuvor ins Meer gelassen wurde. Der Schwimmschlauch kann eine große Länge aufweisen. So kann der Schwimmschlauch beispielsweise eine Länge von mehr als 20 m oder mehr als 50 m aufweisen. Außerdem kann sich die Boje in einem begrenzten Maß bewegen. Für das jeweils neu ankommende Tankschiff bedarf es deshalb zunächst einer Lokalisierung des zweiten Schwimmschlauchs, insbesondere des zweiten Endes des Schwimmschlauchs, um ein möglichst reibungsfreies Heranfahren des Tankschiffs an das zweite Ende des Schwimmschlauchs zu ermöglichen und um daraufhin das zweite Ende des Schwimmschlauchs an das Tankschiff anzukoppeln.

Die Schwimmeinheit wurde zuvor anhand einer beispielhaften Ausgestaltung mit einer Boje und einem mit der Boje gekoppelten Schwimmschlauch erläutert. In der Praxis können jedoch auch andere Schwimmeinheiten verwendet werden. So kann die Schwimmeinheit beispielsweise eine stationär angeordnete Kopplungseinheit und einen schwimmfähigen Schwimmschlauch aufweisen, wobei ein erstes Ende des Schwimmschlauchs mit der Kopplungseinheit verbunden ist. In diesem Fall kann das zweite Ende des Schwimmschlauchs ebenfalls aufgrund der Bewegung des Wassers im Meer einer entsprechenden Bewegung unterliegen. Die zuvor erläuterten Probleme im Zusammenhang mit dem Schwimmschlauch gelten deshalb für dieses Beispiel in analoger Weise.

Die EP 3 604 108 A1 beschreibt ein System aufweisend eine schwimmfähige Boje und einen Schwimmschlauch, der eine Mehrzahl von in Reihe gekoppelten, schwimmfähigen Schlauchsegmenten aufweist. Die Boje weist einen Flüssigkeitsausgangsanschluss auf, der mit dem Schwimmschlauch verbunden ist, so dass der Schwimmschlauch in einer geometrischen Anordnung zu der Boje angeordnet ist. Eine Mehrzahl von Knoteneinheiten sind an dem Schwimmschlauch und der Boje verteilt befestigt. Jede Konteneinheit ist mittels einer zugehörigen Funkeinheit zum Aufbau jeweils einer Funkverbindung zu jeder von zumindest zwei der weiteren Funkeinheiten der jeweiligen Knoteneinheiten ausgebildet, so dass ein Funknetzwerk entsteht. Jede Knoteneinheit ist zur Ermittlung einer Relativdistanz zu jeder weiteren Knoteneinheit basierend auf der jeweiligen Funkverbindung ausgebildet. Eine als Haupteinheit ausgebildete Knoteneinheiten ist zum Sammeln der ermittelten Relativdistanzen und basierend hierauf zur Ermittlung von Standortdaten ausgebildet ist, die die geometrische Anordnung des Schwimmschlauchs relativ zu der Boje repräsentieren. Die Haupteinheit weist eine Funktransmittereinheit auf, die zum drahtlosen Aussenden eines Standortsignals ausgebildet ist, das die Standortdaten repräsentiert.

Der Erfindung liegt deshalb die Aufgabe zugrunde, Informationen bereitzustellen, die ein Ansteuern eines Schiffs an ein zweites Ende des Schwimmschlauchs erleichtern.

Gelöst wird die Aufgabe durch ein System mit den Merkmalen des Anspruchs 1. Vorgesehen ist also ein System zur Ermittlung von Prädiktionsdaten. Das System weist eine Schwimmeinheit und eine Basiseinheit auf. Die Basiseinheit ist von der Schwimmeinheit entfernt angeordnet. Die Schwimmeinheit weist eine schwimmfähige oder stationäre Kopplungseinheit, einen schwimmfähigen Schwimmschlauch und ein Erfassungssystem auf. Ein erstes Ende des Schwimmschlauchs ist mit der Kopplungseinheit verbunden. Das Erfassungssystem ist ausgebildet, als Ist-Anordnung eine aktuelle geometrische Anordnung des Schwimmschlauchs relativ zur Kontrolleinheit zu erfassen. Außerdem ist das Erfassungssystem ausgebildet, als Ist-Standort einen aktuellen geographischen Standort der Schwimmeinheit zu erfassen und/oder zu ermitteln. Das Erfassungssystem ist außerdem zur Ermittlung von Ist-Standortdaten konfiguriert, die den Ist-Standort und die Ist-Anordnung repräsentiert. Die Schwimmeinheit und die Basiseinheit sind über eine Signalverbindung koppelbar ausgebildet. Die Schwimmeinheit ist zur Übertragung der Ist-Standortdaten über die Signalverbindung an die Basiseinheit ausgebildet. Die Basiseinheit ist ausgebildet, als Ist-Wetterdaten aktuelle Wetterdaten zu empfangen, die die aktuelle Windstärke, die aktuelle Windrichtung, eine Vorhersage über die Windstärke und/oder eine Vorhersage über die Windrichtung jeweils des Winds am Ist-Standort repräsentieren. Die Basiseinheit ist außerdem ausgebildet, als Ist-Seedaten aktuelle Seedaten zu empfangen, die die aktuelle Strömungsstärke, die aktuelle Strömungsrichtung, eine Vorhersage über die Strömungsstärke und/oder eine Vorhersage über die Strömungsrichtung jeweils des Wassers am Ist-Standort repräsentieren. Außerdem ist die Basiseinheit konfiguriert, Prädiktionsdaten basierend auf den Ist-Standortdaten, den Ist-Wetterdaten und den Ist-Seedaten zu ermitteln, so dass die Prädiktionsdaten eine Vorhersage für einen geographischen Ziel-Standort des Schwimmschlauchs an einem zukünftigen, vorbestimmten Zeitpunkt repräsentieren und/oder so dass die Prädiktionsdaten eine Vorhersage für eine geometrische Ziel-Anordnung des Schwimmschlauchs relativ zur Kopplungseinheit für den zukünftigen, vorbestimmten Zeitpunkt repräsentieren.

Ein Schiff, das den Schwimmschlauch ansteuert, kann zumeist darüber Auskunft geben, wann das Schiff tatsächlich bei dem Schwimmschlauch eintreffen wird. Dies kann sodann der vorbestimmte Zeitpunkt sein. Mittels der Basiseinheit lassen sich deshalb Prädiktionsdaten ermitteln, die Informationen über den geographischen Ziel-Standort des Schwimmschlauchs und/oder die geometrische Ziel-Anordnung des Schwimmschlauchs relativ zur Kopplungseinheit geben. Wenn das Schiff mit der Basiseinheit in Kommunikationskontakt steht oder wenn die Basiseinheit auf dem Schiff angeordnet ist, können diese Prädiktionsdaten für die Steuerung des Schiffs verwendet werden. Damit kann das Schiff besonders vorteilhaft an das zweite Ende des Schwimmschlauchs herangefahren werden, was den Gesamtaufwand zum Heranfahren des Schiffs an das zweite Ende des Schwimmschlauchs und eine Kollisionsgefahr des Schiffes mit dem Schwimmschlauch deutlich reduziert. Denn selbst wenn sich der Schwimmschlauch derart bewegt hat, dass das zweite Ende in eine ganz andere Richtung weist, als es beim vorherigen Verlassen ins Meer gelassen wurde, ist dies für eine zeiteffiziente Ansteuerung des Schiffs an das zweite Ende des Schwimmschlauchs nicht relevant. Denn die Prädiktionsdaten können anhand des vorbestimmten Zeitpunkts so ermittelt werden, dass dieser Zeitpunkt mit der Ankunft des Schiffs zusammentrifft. Das Schiff kann also vorbestimmen, wann es am zweiten Ende des Schwimmschlauchs ankommt und die Prädiktionsdaten geben an, wo das zweite Ende des Schwimmschlauchs zumindest in etwa sein wird und/oder in welche Richtung es zeigt. Die Prädiktionsdaten unterliegen im Hinblick auf den Ziel-Standort und/oder die Ziel-Anordnung einer gewissen Fehlerwahrscheinlichkeit. Denn sowohl der Ziel-Standort als auch die Ziel-Anordnung beruht auf einer Vorhersage, die mittels der Basiseinheit ermittelt wird. Dennoch ist der Zeitgewinn bereits deshalb sehr groß, da das auf den Schwimmschlauch zusteuernde Schiff nicht zuvor anhalten muss, um ein Beiboot herauszulassen, das den Standort und/oder die Anordnung des Schwimmschlauchs vor Erreichen des Schiffs in Erfahrung bringt. Insgesamt ist also der Aufwand und der Zeitverlust deutlich reduziert.

Der schwimmfähige Schwimmschlauch kann selbstständig im Wasser schwimmen. Da die Schwimmeinheit den schwimmfähigen Schlauch umfasst, wird die Schwimmeinheit auch als solche bezeichnet. Die Kopplungseinheit der Schwimmeinheit muss nicht notwendigerweise schwimmfähig sein. Vielmehr kann die Kopplungseinheit stationär und fest an Land angeordnet und/oder befestigt sein. Bevorzugt ist es jedoch vorgesehen, dass die Kopplungseinheit ebenfalls schwimmfähig ist. In diesem Fall kann die Kopplungseinheit selbstständig schwimmen. Die Kopplungseinheit kann beispielsweise von einem schwimmfähigen Körper, wie einer schwimmfähigen Boje, gebildet sein. Darüber hinaus umfasst die Schwimmeinheit ein Erfassungssystem. Das Erfassungssystem kann einteilig oder mehrteilig ausgebildet sein. Das Erfassungssystem kann ebenfalls schwimmfähig sein. Bevorzugt ist es jedoch vorgesehen, dass das Erfassungssystem der Kopplungseinheit und/oder dem Schwimmschlauch zugeordnet ist. So kann das Erfassungssystem an der Kopplungseinheit und/oder dem Schwimmschlauch befestigt sein.

Der Schwimmschlauch kann von mehreren hintereinander gekoppelten Schlauchsegmenten gebildet sein. In diesem Fall kann jedes Schlauchsegment als solches schwimmfähig ausgebildet sein. Ein erstes Ende des Schwimmschlauchs ist mit der Kopplungseinheit verbunden. Dadurch kann eine mechanische Verbindung zwischen dem ersten Ende des Schwimmschlauchs und der Kopplungseinheit gewährleistet werden. Außerdem ist es bevorzugt vorgesehen, dass durch die Verbindung zwischen dem ersten Ende des Schwimmschlauchs und der Kopplungseinheit eine Fluidverbindung zwischen dem Innenraum des Schwimmschlauchs und der Kopplungseinheit gebildet ist. Dies ist insbesondere dann von Vorteil, wenn eine durch die Kopplungseinheit geleitete Flüssigkeit, insbesondere Erdöl, durch den Schwimmschlauch zum zweiten Ende des Schwimmschlauchs geleitet werden soll.

Das Erfassungssystem ist ausgebildet, die aktuelle geometrische Anordnung des Schwimmschlauchs relativ zur Kopplungseinheit zu erfassen. Das Erfassungssystem kann dazu mehrere Funkeinheiten aufweisen, die zusammen ein Funknetzwerk bilden, wobei das Erfassungssystem mittels der Funkeinheiten und des Funknetzwerks die geometrische Anordnung des Schwimmschlauchs relativ zur Kopplungseinheit erfassen kann. Das Erfassungssystem kann jedoch auch anders ausgestaltet sein. So kann das Erfassungssystem beispielsweise mindestens einen Sensor, insbesondere einen optischen Sensor, aufweisen, der zur Erfassung der aktuellen geometrischen Anordnung des Schwimmschlauchs relativ zur Kopplungseinheit ausgebildet ist. Dabei kann das Erfassungssystem zur Mustererkennung des Schwimmschlauchs im Wasser ausgebildet sein. Die aktuelle geometrische Anordnung des Schwimmschlauchs relativ zur Kopplungseinheit wird als Ist-Anordnung bezeichnet.

Unter einer geometrischen Anordnung kann beispielsweise eine räumliche Struktur und/oder eine räumlichen Anordnung verstanden werden. Die geometrische Anordnung kann beispielsweise durch die räumlichen Koordinaten, beispielsweise in einer Ebene, des Schwimmschlauchs bezogen auf die Kopplungseinheit bestimmt und/oder repräsentiert sein. Alternativ oder ergänzend kann die geometrische Anordnung beispielsweise durch räumliche Koordinaten, vorzugsweise in einer Ebene, von Schlauchsegmenten des Schwimmschlauchs bezogen auf die Kopplungseinheit bestimmt und/oder repräsentiert sein. Die geometrische Anordnung kann sich alternativ oder ergänzend beispielsweise durch die räumliche Ausrichtung des Schwimmschlauchs und/oder den Verlauf der Mittellinie des Schwimmschlauchs in Bezug auf die Kopplungseinheit beziehen. Die geometrische Anordnung des Schwimmschlauchs relativ zur Kopplungseinheit kann darüber Aufschluss geben, wie und/oder in welcher geometrischen Form der Schwimmschlauch relativ zu der Kopplungseinheit angeordnet ist.

Das Erfassungssystem ist ausgebildet, den aktuellen geographischen Standort der Schwimmeinheit zu erfassen und/oder zu ermitteln. Das Erfassungssystem kann beispielsweise dazu ausgebildet sein, um ein Satellitensignal, insbesondere ein Navigationssignal eines Satelliten, zu empfangen und basierend auf diesem Satellitensignal den eigenen geographischen Standort zu ermitteln. Es ist jedoch auch möglich, dass das Erfassungssystem durch aktives Aussenden von Signalen und Empfang von Reflektionen dieses aktiv ausgesendeten Signals auf den eigenen geographischen Standort zu schließen. Außerdem kann das Erfassungssystem dazu ausgebildet sein, die Kompassrichtung zu erfassen. Darüber hinaus sind weitere Möglichkeiten bekannt, die es erlauben auf den eigenen geographischen Standort zu schließen. Hierzu kann das Erfassungssystem entsprechend ausgebildet sein. Ein geographischer Standort kann durch geographische Koordinaten bestimmt sein. Diese werden oftmals im Sexagesimalformat angegeben. Ein Standort kann in einer geographischen Breite und Länge in Grad und Minuten angegeben sein.

Außerdem ist das Erfassungssystem zur Ermittlung von Ist-Standortdaten ausgebildet, die den Ist-Standort und die Ist-Anordnung repräsentieren. Mit den Ist-Standortdaten können also Informationen in Bezug auf den Ist-Standort und die Ist-Anordnung zusammengeführt werden. Hierzu kann das Erfassungssystem ausgebildet sein. Die Ist-Standortdaten können in Datenpakete untergliedert sein. Der Ist-Standort und die Ist-Anordnung können durch jeweils unterschiedliche Datenpakete repräsentiert sein.

Die Schwimmeinheit und die Basiseinheit sind über eine Signalverbindung koppelbar. Vorzugsweise besteht zwischen der Schwimmeinheit und der Basiseinheit die genannte Signalverbindung. Dabei hat es sich als vorteilhaft herausgestellt, wenn die Signalverbindung zwischen dem Erfassungssystem der Schwimmeinheit und der Basiseinheit ausgebildet ist. Die Ist-Standortdaten werden über die Signalverbindung von der Schwimmeinheit, insbesondere von dem zugehörigen Erfassungssystem an die Basiseinheit übertragen. Hierzu können die Schwimmeinheit und die Basiseinheit entsprechend ausgebildet sein. Die Ist-Standortdaten können paketweise oder als Ganzes übertragen werden. Der Basiseinheit werden also die Informationen bezüglich des aktuellen geographischen Standorts und der aktuellen geographischen Anordnung des Schwimmschlauchs relativ zur Kopplungseinheit zur Verfügung gestellt.

Die Basiseinheit dient zur Ermittlung von Prädiktionsdaten, die eine Vorhersage über den Ziel-Standort des Schwimmschlauchs für einen zukünftigen, vorbestimmten Zeitpunkt und/oder die Ziel-Anordnung des Schwimmschlauchs für den zukünftigen, vorbestimmten Zeitpunkt repräsentieren. Die Basiseinheit kann dazu eine entsprechende Prozessoreinheit aufweisen, die zur Ermittlung der Prädiktionsdaten ausgebildet und/oder konfiguriert ist. Ausgehend von dem aktuellen geographischen Standort der Schwimmeinheit und der geometrischen Anordnung des Schwimmschlauchs relativ zur Kopplungseinheit kann unter Berücksichtigung der Seedaten und der Wetterdaten vorhergesagt werden, wohin sich der Schwimmschlauch bewegen wird und an welcher Position, nämlich dem Ziel-Standort der Schwimmschlauch an dem zukünftigen, vorbestimmten Zeitpunkt sein wird und in welcher Anordnung der Schwimmschlauch, nämlich der geometrischen Ziel-Anordnung, an dem vorbestimmten Zeitpunkt sein wird. Denn die Seedaten geben darüber Auskunft, wie die aktuelle Bewegung des Wassers ist, in dem der Schwimmschlauch schwimmt. Die Bewegung des Wassers verursacht eine entsprechende Bewegung des Schwimmschlauchs. Weist das Wasser beispielsweise eine gewisse Strömung in einer Richtung auf, so verursacht dies ebenfalls eine Bewegung des Schwimmschlauchs in der Strömungsrichtung des Wassers. Die Bewegung des Schwimmschlauchs kann jedoch außerdem von dem Wind verursacht und/oder beeinflusst sein, der auf den Schwimmschlauch von außen wirkt. Denn der schwimmende Schwimmschlauch ragt zumindest teilweise aus dem Wasser heraus. Dadurch entsteht eine Angriffsfläche, auf die der Wind strömen kann und dadurch eine entsprechende Bewegung des Schwimmschlauchs verursacht. Die von dem Wind verursachte Bewegungskomponente und die von der Wasserströmung verursachte Bewegungskomponente des Schwimmschlauchs überlagern sich, so dass daraus eine resultierende Bewegung des Schwimmschlauchs entsteht. Diese von dem Wasser und Wind verursachte Bewegung kann in einem entsprechenden mathematischen Modell von der Basiseinheit gespeichert sein. Die Basiseinheit kann zur Ausführung dieses mathematischen Modells ausgebildet sein, wobei die Ist-Wetterdaten und die Ist-Seedaten als Eingangsgröße in das mathematische Modell einschließen. Darüber hinaus können der Ist-Standort und die Ist-Anordnung als Eingangsgröße in das mathematische Modell einfließen. Außerdem kann der zukünftige, vorbestimmte Zeitpunkt als Eingangsgröße in das mathematische Modell einfließen. Das mathematische Modell ist derart ausgebildet und/oder konfiguriert, dass in Abhängigkeit der Eingangsgrößen der Ziel-Standort des Schwimmschlauchs und/oder die geometrische Ziel-Anordnung des Schwimmschlauchs relativ zur Kopplungseinheit ausgegeben wird. Wird dieses mathematische Modell also von der Basiseinheit ausgeführt, so ermittelt die Basiseinheit dadurch die Prädiktionsdaten, die den geographischen Ziel-Standort des Schwimmschlauchs an dem zukünftigen, vorbestimmten Zeitpunkt repräsentieren und/oder die die geometrische Ziel-Anordnung des Schwimmschlauchs relativ zur Kontrolleinheit für den zukünftigen, vorbestimmten Zeitpunkt repräsentieren. Mittels des Systems können also Prädiktionsdaten ermittelt werden, die abgerufen werden können und/oder die von dem System bereitgestellt werden können. Diese Prädiktionsdaten können verwendet werden, um ein besonders präzises und zugleich zeit- und kosteneffizientes Ansteuern eines Schiffs an das zweite Ende des Schwimmschlauchs zu erlauben, wenn das Ansteuern an dem zukünftigen, vorbestimmten Zeitpunkt erfolgen soll. Plant ein Schiff beispielsweise das Ankoppeln des zweiten Endes des Schwimmschlauchs zu einem bekannten, zukünftigen und somit vorbestimmten Zeitpunkt, so kann dieser den zukünftigen, vorbestimmten Zeitpunkt repräsentieren, der zur Ermittlung der Prädiktionsdaten dient. Der vorbestimmte Zeitpunkt kann also an die Basiseinheit übermittelt werden. Die Basiseinheit kann zum Empfang von Daten ausgebildet sein, die den zukünftigen, vorbestimmten Zeitpunkt repräsentieren. Daraufhin kann die Basiseinheit basierend auf den Ist-Standortdaten, den Ist-Wetterdaten und den Ist-Seedaten sowie dem nunmehr bekannten, zukünftigen, vorbestimmten Zeitpunkt, die Prädiktionsdaten ermitteln. Daraufhin kann die Basiseinheit dazu konfiguriert sein, die Prädiktionsdaten an den Teilnehmer zurückzuschicken, von dem die Basiseinheit zuvor den vorbestimmten Zeitpunkt bzw. die zugehören Daten erhalten hat. Es kann jedoch auch vorgesehen sein, dass die Prädiktionsdaten von der Basiseinheit zur Übertragung bereitgestellt werden. Fragt der Teilnehmer also die Prädiktionsdaten ab, so kann die Übertragung der Prädiktionsdaten von der Basiseinheit an den zuvor genannten Teilnehmer erfolgen. Die Übertragung der Prädiktionsdaten kann kabellos oder kabelgebunden erfolgen.

Wie zuvor bereits erläutert, kann die Kopplungseinheit als eine stationär angeordnete Kopplungseinheit ausgebildet sein. Die Kopplungseinheit kann dazu beispielsweise mit Drahtseilen am Meeresboden derart befestigt sein, dass die Kopplungseinheit einen festen Standort an der Wasseroberfläche eines Meeres aufweist. Die stationäre Anordnung der Kopplungseinheit schließt also nicht aus, dass die Kopplungseinheit schwimmfähig ist. Es ist aber auch möglich, dass die Kopplungseinheit nicht schwimmfähig ist. Die Kopplungseinheit kann in diesem Fall an Land stationär angeordnet sein. In diesem Fall wird die Kopplungseinheit als eine stationäre, fest angeordnete Kopplungseinheit bezeichnet. Ist die Kopplungseinheit stationär angeordnet, so kann davon ausgegangen werden, dass der Standort der Kopplungseinheit nicht veränderbar ist. Jedenfalls zumindest im Wesentlichen nicht veränderbar ist. Der Standort der Kopplungseinheit kann von einem Datenspeicher gespeichert sein. Das Erfassungssystem kann auf diesen Datenspeicher zugreifen und dadurch den Ist-Standort der Kopplungseinheit erfassen. Der Ist-Standort der Schwimmeinheit kann durch den Ist-Standort der Kopplungseinheit bestimmt sein. Grundsätzlich kann der Ist-Standort jedoch auch durch einen Ist-Standort der Mitte des Schwimmschlauchs und/oder der Mitte der Kombination der Kopplungseinheit und des Schwimmschlauchs bestimmt sein. Somit kann der Ist-Standort beispielsweise der mittlere geographische Standort der Schwimmeinheit sein.

Die Kopplungseinheit kann zum Anschluss an den schwimmfähigen Schwimmschlauch ausgebildet sein. Die Kopplungseinheit kann beispielsweise einen Schlauchanschluss aufweisen, der mit dem ersten Ende des Schwimmschlauchs verbunden ist. Dies kann eine lösbare Verbindung sein. So kann das erste Ende des Schwimmschlauchs beispielsweise mittels Schrauben an dem Schlauchanschluss der Kopplungseinheit befestigt und/oder mit dieser verbunden sein.

Eine weitere vorteilhafte Ausgestaltung der stationär angeordneten Kopplungseinheit kann beispielsweise durch eine Kopplungseinheit gebildet sein, die auf einem Steg oder einem wassernahen Gebäude und/oder einer anderen in oder am Wasser angeordneten ortsfesten Vorrichtung angeordnet ist. Von der Kopplungseinheit kann sich der Schwimmschlauch ins Wasser erstrecken, so dass der Schwimmschlauch ausgehend von der Kopplungseinheit im Wasser schwimmt. Der Schwimmschlauch ist in jedem Fall ebenfalls der Bewegung des Wassers und/oder dem Wind ausgesetzt.

Eine vorteilhafte Ausgestaltung des Systems zeichnet sich dadurch aus, dass das Erfassungssystem zum Empfangen eines satellitengestützen, drahtlosen Navigationssignals ausgebildet ist, wobei das Erfassungssystem konfiguriert ist, als Ist-Standort den aktuellen geographischen Standort der Schwimmeinheit basierend auf dem Navigationssignal zu ermitteln. Das Navigationssignal kann beispielsweise ein GPS-Navigationssignal oder ein Navigationssignal von einem anderen Satellitensystem sein. Mittels derartiger Navigationssignale kann über die Laufzeit der unterschiedlichen Signalkomponenten auf den Ist-Standort des jeweiligen Empfängers geschlossen werden. Hierzu kann das Erfassungssystem entsprechend ausgebildet sein. Deshalb kann das Erfassungssystem auch basierend auf dem Navigationssignal den aktuellen geographischen Standort des Erfassungssystems selbst und damit auch den aktuellen geographischen Standort der Schwimmeinheit basierend auf dem Navigationssignal ermitteln. Ein Kompasssignal und/oder andere Funksignale können alternativ oder zusätzlich von dem Erfassungssystem empfangen und/oder erfasst werden und dazu verwendet werden, um den aktuellen geographischen Standort der Schwimmeinheit zu ermitteln. Dieser geographische aktuelle Standort kann also beispielsweise basierend auf dem Navigationssignal, dem Kompasssignal und anderen Funksignalen ermittelt werden. Hierzu kann das Erfassungssystem entsprechend konfiguriert sein.

Eine weitere vorteilhafte Ausgestaltung des Systems zeichnet sich dadurch aus, dass die Kopplungseinheit von einer schwimmfähigen Boje gebildet ist. Somit sind die Kopplungseinheit, gebildet durch die schwimmfähige Boje, und der Schwimmschlauch gemeinsam schwimmfähig. Das Erfassungssystem kann von der Boje und/oder dem Schwimmschlauch getragen sein, so dass die gesamte Schwimmeinheit schwimmfähig ist.

Eine weitere vorteilhafte Ausgestaltung des Systems zeichnet sich dadurch aus, dass das Erfassungssystem einen Teil des Schwimmschlauchs und/oder der Kopplungseinheit, insbesondere der schwimmfähigen Boje, bildet. So kann ein Teil des Erfassungssystems beispielsweise an dem Schwimmschlauch befestigt und/oder in ein Gummimaterial des Schwimmschlauchs eingebettet sein. Ein weiterer Teil des Erfassungssystems kann an der Kopplungseinheit, insbesondere an der schwimmfähigen Boje, befestigt sein. Das Erfassungssystem kann also mehrteilig ausgebildet sein, wobei die Teile des Erfassungssystems auf den Schwimmschlauch und die Kopplungseinheit verteilt sind. Durch die mehrteilige Ausgestaltung des Erfassungssystems ist eine besonders präzise Erfassung der geometrischen Anordnung des Schwimmschlauchs relativ zu der Kopplungseinheit möglich. So können Teile des Erfassungssystems, die dem Schwimmschlauch zugeordnet sind, mit dem mindestens einen Teil des Erfassungssystems, das der Kopplungseinheit zugeordnet ist, per Funkverbindungen kommunizieren. Über die Funkverbindungen kann ein Funknetzwerk gebildet sein, wobei über das Funknetzwerk auf die geometrische Anordnung des Schwimmschlauchs relativ zu der Kopplungseinheit geschlossen werden kann. Hierzu kann das Erfassungssystem entsprechend ausgebildet sein.

Der Schwimmschlauch ist als ein schwimmfähiger Schwimmschlauch ausgebildet. Der Schwimmschlauch kann mehrere Schlauchsegmente aufweisen, die hintereinander zu einem Schlauchstrang angeordnet und an den Stirnseiten jeweils an den gegenüber liegenden Enden miteinander befestigt sind. Der Schwimmschlauch kann deshalb auch als schwimmfähiger Schlauchstrang bezeichnet sein. Unter schwimmfähig wird vorzugsweise die Fähigkeit verstanden, in Wasser, insbesondere in Meerwasser, schwimmen zu können. Dies kann darin resultieren, dass der Schwimmschlauch und/oder die Kopplungseinheit, insbesondere ausgestaltet als eine schwimmfähige Boje, jeweils zumindest abschnittsweise selbstständig oberhalb der Oberfläche des Wassers angeordnet ist bzw. über die Oberfläche des Wassers hinausragt. Jedes Schlauchsegment kann nach Art eines Schlauchs als solches und/oder eines Schlauchabschnitts ausgebildet sein. Jedes Schlauchsegment kann an den beiden zugehörigen Enden jeweils Kopplungselemente aufweisen, die ausgebildet sind, so dass mehrere Schlauchsegmente hintereinander, also in Reihe, miteinander gekoppelt werden können. Der Schwimmschlauch weist vorzugsweise einen zum Führen von Flüssigkeit, wie Erdöl, ausgebildeten Schlauchkanal auf, der gemeinsam von den Schlauchsegmenten gebildet ist. Die Schlauchsegmente sind vorzugsweise derart miteinander gekoppelt, dass die Flüssigkeit durch den Schlauchkanal verlustfrei geführt werden kann.

Eine weitere vorteilhafte Ausgestaltung des Systems zeichnet sich dadurch aus, dass die Basiseinheit eine stationär ausgebildete Basiseinheit ist. Die Basiseinheit kann also stationär an Land befestigt sein. Die Basiseinheit kann als eine ortsfeste und an Land stationär angeordnete Basiseinheit ausgebildet sein. Die Anordnung der Basiseinheit an Land bietet den Vorteil, dass die Basiseinheit besonders einfach gewartet und mit einem weiteren Datennetzwerk gekoppelt sein kann. Außerdem kann die Basiseinheit in diesem Fall eine besonders leistungsfähige Prozessoreinheit aufweisen, die dazu geeignet ist, die Prädiktionsdaten besonders schnell zu ermitteln. Darüber hinaus ist es möglich, dass die Basiseinheit aufgrund der Anordnung an Land besonders einfachen Zugang zu den Ist-Wetterdaten und/oder den Ist-Seedaten erhält. Dies kann beispielsweise über eine Internetverbindung erfolgen, die zu der Basiseinheit hergestellt sein kann.

Eine weitere vorteilhafte Ausgestaltung des Systems zeichnet sich dadurch aus, dass die Basiseinheit auf einem Fahrzeug, insbesondere einem Schiff, installiert und/oder angeordnet ist. Auch in diesem Fall kann die Basiseinheit eine besonders leistungsfähige Prozessoreinheit aufweisen. Denn an dem Schiff kann ein entsprechend großer Bauraum bereitgestellt sein, um die Basiseinheit dort zu installieren und/oder anzuordnen. Auch die Signalverbindung zwischen der Basiseinheit und der Schwimmeinheit kann gewährleistet werden, wenn die Basiseinheit auf dem Schiff angeordnet und/oder installiert ist. In diesem Fall ist die Signalverbindung zumindest teilweise als Funk-Signalverbindung ausgebildet. Für eine entsprechende Funkübertragung kann die Basiseinheit und die Schwimmeinheit, vorzugsweise das zugehörige Erfassungssystem, ausgebildet sein.

Eine vorteilhafte Ausgestaltung des Systems zeichnet sich dadurch aus, dass die Signalverbindung zumindest teilweise als eine Funkverbindung ausgebildet ist. Die Signalverbindung bezieht sich hierbei auf die Signalverbindung zwischen der Schwimmeinheit und der Basiseinheit. So kann die Schwimmeinheit, insbesondere das zugehörige Erfassungssystem, eine Signalverbindung zunächst zu einem Satelliten aufbauen, der wiederum weitere Verbindungen zu der Basiseinheit herstellt. In diesem Fall ist die Signalverbindung teilweise als Funkverbindung ausgebildet. Es ist jedoch auch möglich, dass eine direkte Signalverbindung als Funkverbindung zwischen der Basiseinheit und der Schwimmeinheit, insbesondere dem zugehörigen Erfassungssystem, hergestellte ist. Hierzu können die Schwimmeinheit, insbesondere das zugehörige Erfassungssystem, und die Basiseinheit ausgebildet sein.

Eine vorteilhafte Ausgestaltung des Systems zeichnet sich dadurch aus, dass von der Basiseinheit ein mathematisches Rechenmodell gespeichert ist, das eine Bewegung der Schwimmeinheit, insbesondere des zugehörigen Schwimmschlauchs, im Wasser in Abhängigkeit von einer Strömungsstärke des Wassers, einer Strömungsrichtung des Wassers, einer Windstärke des Winds über dem Wasser und/oder einer Windrichtung des Winds über dem Wasser abbildet, wobei die Basiseinheit ausgebildet ist, die Prädiktionsdaten außerdem mittels des Rechenmodells zu ermitteln.

Insbesondere der schwimmfähige Schwimmschlauch der Schwimmeinheit ist schwimmfähig und kann deshalb im Wasser schwimmen. Ein Teil des Schwimmschlauchs ragt über die Wasserlinie des Wassers hinaus. Der restliche Teil des Schwimmschlauchs ist unterhalb der Wasserlinie angeordnet. Deshalb kann der Schwimmschlauch sowohl von der Strömung des Wassers als auch von der Strömung des Winds angetrieben werden. Die Strömung des Wassers kann von der Strömungsstärke und der Strömungsrichtung bestimmt sein. Die Strömung des Winds kann von der Windrichtung des Winds und von der Windstärke des Winds bestimmt sein. Deshalb lässt sich mit dem Rechenmodell auch die Bewegung des Schwimmschlauchs ermitteln, wenn eine bekannte Wasserströmung und/oder eine bekannte Windströmung auf den Schwimmschlauch wirkt. Die Basiseinheit ist ausgebildet, die aktuellen Seedaten und die aktuellen Winddaten zu empfangen. Der Basiseinheit liegen deshalb die Informationen über die Windströmung und die Seeströmung vor, die auf den Wasserschlauch wirken. Deshalb ist die Basiseinheit mittels des mathematischen Rechenmodells und basierend auf den Ist-Standortdaten, den Ist-Wetterdaten, den Ist-Seedaten und dem zukünftigen, vorbestimmten Zeitpunkt dazu konfiguriert und/oder ausgebildet, um die Prädiktionsdaten zu ermitteln.

Eine vorteilhafte Ausgestaltung des Systems zeichnet sich dadurch aus, dass die Basiseinheit ausgebildet ist, ausgehend von dem Ist-Standort und der Ist-Anordnung, die durch die Ist-Standortdaten repräsentiert sind, eine Bewegung der Schwimmeinheit, insbesondere des zugehörigen Schwimmschlauchs, mittels des Rechenmodells sowie den Ist-Wetterdaten und Ist-Seedaten, die die Strömungsrichtung, Strömungsstärke, Windrichtung und Windstärke als Eingangsgröße für das Rechenmodell bestimmen, zu dem geographischen Ziel-Standort und/oder der geometrischen Ziel-Anordnung vorhersagend zu ermitteln. Als weitere Eingangsgröße kann der zukünftige, vorbestimmte Zeitpunkt berücksichtigt werden. Dieser kann der Basiseinheit über ein Datensignal übertragen werden. Die Basiseinheit kann also zum Empfang dieses Datensignals ausgebildet sein, das den zukünftigen, vorbestimmten Zeitpunkt repräsentiert. Liegen die Eingangsgrößen vor, so kann das Rechenmodell mit den Eingangsgrößen von der Basiseinheit ausgeführt werden. Die Basiseinheit kann dazu eine entsprechende Prozessoreinheit aufweisen, die zum Ausführen des Rechenmodells ausgebildet ist. Als Ausgangsgröße werden von dem Rechenmodell die Prädiktionsdaten ausgegeben, die den geographischen Ziel-Standort und/oder die geometrische Ziel-Anordnung repräsentieren. Mittels des mathematischen Rechenmodells kann also eine Vorhersage über den Standort und die Ausrichtung des Schwimmschlauchs ermittelt werden, die der Schwimmschlauch zu dem zukünftigen, vorbestimmten Zeitpunkt haben wird. Diese Vorhersage beruht auf den Ist-Seedaten und den Ist-Winddaten. Diese haben Einfluss auf die Bewegung des Schwimmschlauchs und können deshalb mittels des mathematischen Rechenmodells dazu verwendet werden, um die genannte Vorhersage zu ermöglichen. Die Vorhersage unterliegt jedoch einer gewissen Fehlerwahrscheinlichkeit. Denn es können auch noch weitere Einflussgrößen vorherrschen, die die Bewegung des Schwimmschlauchs beeinflussen können. Dennoch hat sich in der Praxis herausgestellt, dass die Vorhersage mit dem tatsächlich zum vorbestimmten Zeitpunkt eintretenden Anordnung des Schwimmschlauchs relativ zur Kopplungseinheit und dem tatsächlich eintretenden Standort am vorbestimmten Zeitpunkt nur eine geringe Abweichung besteht. Deshalb können die Prädiktionsdaten sehr vorteilhaft verwendet werden, um ein an das zweite Ende des Schwimmschlauchs heranfahrendes Fahrzeug, insbesondere ein Schiff, besonders präzise zu lenken. Dadurch kann Zeit eingespart werden, was auch zu einer entsprechenden Kosteneinsparung führt.

Eine vorteilhafte Ausgestaltung des Systems zeichnet sich dadurch aus, dass das mathematische Rechenmodell durch ein künstliches neuronales Netzwerk repräsentiert ist. Das neuronale Netzwerk kann zuvor mit Musterdaten trainiert worden sein, so dass das neuronale Netzwerk die mathematische Abbildung des Rechenmodells besonders genau gewährleistet. Das neuronale Netzwerk kann also entsprechend einem mathematischen Modell ausgeführt werden.

Eine vorteilhafte Ausgestaltung des Systems zeichnet sich dadurch aus, dass die Basiseinheit ausgebildet ist, einen Trainingsschritt zur Anpassung des neuronalen Netzwerks basierend auf jeweils neu empfangenen Ist-Standortdaten auszuführen. Die Basiseinheit kann beispielsweise dazu ausgebildet sein, Ist-Standortdaten periodisch zu empfangen. Mit jeweils neu empfangenen Ist-Standortdaten können Prädiktionsdaten mittels des neuronalen Netzwerks ermittelt werden. Werden daraufhin wieder neue Ist-Standortdaten empfangen, kann ein Abgleich zwischen den Ist-Standortdaten und den Prädiktionsdaten erfolgen. Basierend auf der Differenz kann eine Anpassung des neuronalen Netzwerks erfolgen. Dadurch kann die Ermittlungsgenauigkeit durch das neuronale Netzwerk gesteigert werden.

Eine vorteilhafte Ausgestaltung des Systems zeichnet sich dadurch aus, dass das mathematische Rechenmodell durch ein lineares, mathematisches Rechenmodell repräsentiert ist. Von dem linearen, mathematischen Rechenmodell können die linearen Bewegungsgleichungen repräsentiert sein, die den Einfluss der Wasserströmung und/oder der Windströmung auf eine Bewegung des Schwimmschlauchs repräsentieren.

Eine vorteilhafte Ausgestaltung des Systems zeichnet sich dadurch aus, dass die Basiseinheit zumindest teilweise von einer Rechner-Cloud gebildet ist. Hierbei kann es sich um ein sogenanntes Cloud-Netzwerk handeln. Es kann auch vorgesehen sein, dass die Basiseinheit zumindest im Wesentlichen vollständig von einer Rechner-Cloud gebildet ist. Dadurch kann die Basiseinheit besonders schnell hergestellt sein.

Eine vorteilhafte Ausgestaltung des Systems zeichnet sich dadurch aus, dass die Kopplungseinheit, insbesondere die schwimmfähige Boje, einen Flüssigkeitseingangsanschluss aufweist, der zum Anschluss für einen Unterwasserschlauch ausgebildet ist, wobei die Kopplungseinheit, insbesondere die schwimmfähige Boje, einen Flüssigkeitsausgangsanschluss aufweist, der mit dem ersten Ende des Schwimmschlauchs verbunden ist. Die Kopplungseinheit bzw. die schwimmfähige Boje kann einen Fluidkanal zwischen dem Flüssigkeitseingangsanschluss und dem Flüssigkeitsausgangsanschluss aufweisen. Durch diesen Fluidkanal kann also eine Fluidverbindung zum Lenken von Flüssigkeit vom Flüssigkeitseingangsanschluss zum Flüssigkeitsausgangsanschluss hergestellt sein. Grundsätzlich kann es auch vorgesehen sein, dass Flüssigkeit in umgekehrter Richtung durch den Fluidkanal strömen kann. Die Kopplungseinheit bzw. die schwimmfähige Boje ist somit nicht notwendigerweise auf eine Strömungsrichtung beschränkt. Wenn der Unterwasserschlauch an dem Flüssigkeitseingangsanschluss angeschlossen ist und das erste Ende des schwimmfähigen Schwimmschlauchs am Flüssigkeitsausgangsanschluss angeschlossen ist, kann Flüssigkeit, insbesondere Erdöl, durch den Unterwasserschlauch und sodann durch den Fluidkanal der Kopplungseinheit bzw. der Boje zum ersten Ende des schwimmfähigen Schlauchs gelenkt werden. Damit ist es möglich, die Flüssigkeit, insbesondere das Erdöl, auch weiter durch den schwimmfähigen Schwimmschlauch bis zum zweiten Ende des schwimmfähigen Schwimmschlauch zu lenken. Wie bereits erwähnt ist grundsätzlich auch eine umgekehrte Strömungsrichtung für Flüssigkeit möglich. So kann beispielsweise Flüssigkeit vom zweiten Ende des schwimmfähigen Schwimmschlauchs durch den schwimmfähigen Schwimmschlauch zu der Kopplungseinheit bzw. Boje gepumpt werden, so dass die Flüssigkeit durch den entsprechenden Fluidkanal in die Unterwasserleitung gelangt.

Eine vorteilhafte Ausgestaltung des Systems zeichnet sich dadurch aus, dass die Schwimmeinheit eine Mehrzahl von Knoteneinheiten aufweist, die an dem Schwimmschlauch und vorzugsweise auch an der Kopplungseinheit, insbesondere der schwimmfähigen Boje, derart befestigt sind, so dass die Knoteneinheiten zwischen der Kopplungseinheit, insbesondere der schwimmfähigen Boje, und einem zweiten Ende des Schwimmschlauchs verteilt angeordnet sind, wobei jede Knoteneinheit mittels einer zugehörigen Funkeinheit zum Aufbau jeweils einer Funkverbindung zu jeder von mindestens zwei der weiteren Funkeinheiten der jeweiligen Knoteneinheiten ausgebildet ist, so dass ein Funknetzwerk, insbesondere ein Maschen-Funknetzwerk, entsteht. Jede Knoteneinheit ist zur Ermittlung einer Relativdistanz zu jeder über eine Funkverbindung verbundenen, weiteren Knoteneinheit basierend auf der jeweiligen Funkverbindung ausgebildet, wobei mindestens eine der Knoteneinheiten eine Haupteinheit bildet, die zum Sammeln der von den weiteren Knoteneinheiten ermittelten Relativdistanzen über die Funkverbindungen und/oder das Funknetzwerk ausgebildet ist. Die Haupteinheit ist basierend auf den gesammelten Relativdistanzen zur Ermittlung der Ist-Anordnung ausgebildet, die die aktuelle geometrische Anordnung des Schwimmschlauchs relativ zu der Kopplungseinheit, insbesondere der schwimmfähigen Boje, repräsentiert.

Unter einer geometrischen Anordnung kann beispielsweise eine räumliche Struktur und/oder eine räumliche Anordnung verstanden werden. Die geometrische Anordnung des Schwimmschlauchs relativ zu der Kopplungseinheit, insbesondere der Boje, kann also darüber Aufschluss geben, in welcher geometrischen Form der Schwimmschlauch relativ zu der Kopplungseinheit, insbesondere der Boje, angeordnet ist. Um die Informationen über die geometrische Anordnung des Schwimmschlauchs relativ zur Kopplungseinheit für die Ermittlung der Prädiktionsdaten zur Verfügung zu stellen, ist es bevorzugt vorgesehen, dass die Haupteinheit basierend auf den gesammelten Relativdistanzen zur Ermittlung der geometrischen Anordnung des Schwimmschlauchs relativ zu der Kopplungseinheit, insbesondere der Boje, ausgebildet ist. Die Relativdistanzen beziehen sich dabei vorzugsweise auf die Abstände zwischen den Knoteneinheiten und/oder auf die Abstände von der Haupteinheit zu jeder weiteren Knoteneinheit. Sofern die direkten Abstände zwischen den Knoteneinheiten entlang des Schwimmschlauchs nicht von der Haupteinheit gespeichert sind, können diese ebenfalls als ermittelte Relativdistanzen zwischen den Knoteneinheiten bei der Ermittlung der geometrischen Anordnung des Schwimmschlauchs relativ zu der Kopplungseinheit, insbesondere der Boje, berücksichtigt werden. Ansonsten können auch die gespeicherten Abstände zwischen den Knoteneinheiten bei der Ermittlung der geometrischen Anordnung berücksichtigt werden. Unter den zuvor genannten, direkten Abständen ist insbesondere der Abstand zwischen benachbarten Knoteneinheiten entlang des Schwimmschlauchs gemeint. Die mittels der Funkverbindungen ermittelbaren Relativdistanzen können sich vorzugsweise auf die Relativdistanzen zwischen der Haupteinheit und jeder der weiteren Knoteneinheiten beziehen. Mittels dieser Daten lässt sich geometrisch abbilden, wie die geometrische Anordnung des Schwimmschlauchs relativ zu der Kopplungseinheit, insbesondere der Boje, ist.

Zur Ermittlung der Relativdistanzen weisen die Knoteneinheiten Funkeinheiten auf. Mittels der Funkeinheiten können Funkverbindungen hergestellt werden, so dass ein Funknetzwerk, insbesondere das Maschen-Funknetzwerk, entsteht. Über die Funkverbindungen können Funksignale ausgetauscht werden. Die Funksignale haben dabei eine Laufzeit zwischen dem Aussenden und dem anschließenden Empfangen. Die Funksignale können deshalb dazu verwendet werden, um die Distanz zwischen den entsprechenden Funkeinheiten zu ermitteln. Hierzu sind die Knoteneinheiten bevorzugt ausgebildet. Die Funkverbindungen dienen deshalb vorzugsweise zur Ermittlung der Relativdistanzen zwischen den Knoteneinheiten bzw. den zugehörigen Funkeinheiten. Vorzugsweise sind die Knoteneinheiten so konfiguriert, dass die ermittelten Relativdistanzen über die Funkverbindungen des Funknetzwerks ausgetauscht werden. Außerdem kann es vorgesehen sein, dass jede Funkeinheit derart konfiguriert ist, dass die Relativdistanzen durch Triangulation auf Basis von Laufzeiten der über die Funkverbindungen ausgetauschten Signale ermittelt wird. Jede der Knoteneinheiten kann deshalb als eine elektronische Knoteneinheit ausgebildet und/oder bezeichnet sein. Jede der Knoteneinheiten ist mit dem System fest oder lösbar verbunden. So können alle oder zumindest ein Teil der Knoteneinheiten fest und/oder lösbar mit dem Schwimmschlauch verbunden sein. Es ist aber auch möglich, dass zumindest eine der Knoteneinheiten mit der Kopplungseinheit, insbesondere der schwimmfähigen Boje, verbunden ist. Außerdem kann es vorgesehen sein, dass jeweils eine der Knoteneinheiten mit genau jeweils einem der Schlauchsegmente des Schwimmschlauchs verbunden ist. Dies ist insbesondere dann der Fall, wenn der Schwimmschlauch von mehreren Schlauchsegmenten gebildet ist oder die mehreren Schlauchsegmente aufweist. Anderenfalls können die (weiteren) Funkeinheiten über die Länge des Schwimmschlauchs verteilt angeordnet sein. Hierbei hat es sich als vorteilhaft herausgestellt, wenn der Abstand zwischen den Funkeinheiten gleich ist. Daraus kann deshalb eine gleichmäßige Verteilung der Funkeinheiten zwischen der Kopplungseinheit, insbesondere der schwimmfähigen Boje, und dem zweiten Ende des Schwimmschlauchs resultieren. Weist der Schwimmschlauch eine Vielzahl von Schlauchsegmenten auf, kann es vorgesehen sein, dass die Knoteneinheiten derart verteilt angeordnet sind, dass jedes zweite oder jedes dritte Schlauchsegment mit einer der Knoteneinheiten verbunden ist. Andere Verteilungen der Knoteneinheiten können ebenfalls vorgesehen sein.

Eine vorteilhafte Ausgestaltung des Systems zeichnet sich dadurch aus, dass der Schwimmschlauch von einer Mehrzahl von in Reihe miteinander gekoppelten Schlauchsegmenten gebildet ist, wobei jedes Schlauchsegment zumindest indirekt mit mindestens einer der Knoteneinheiten verbunden ist, und/oder dass jedes Schlauchsegment jeweils eine der Knoteneinheiten umfasst. Wenn also jedes Schlauchsegment mit einer der Knoteneinheiten gekoppelt ist, kann eine besonders genaue Ermittlung der geometrischen Anordnung des Schwimmschlauchs relativ zu der Kopplungseinheit, insbesondere der schwimmfähigen Boje, ermittelt werden. Ausgehend von der ermittelten geometrischen Anordnung und unter Berücksichtigung der Seedaten und Winddaten sowie unter Berücksichtigung des zukünftigen, vorbestimmten Zeitpunkts werden die Prädiktionsdaten ermittelt. Die Prädiktionsdaten können umso genauer ermittelt werden, desto präziser die aktuelle geometrische Anordnung zuvor ermittelt wurde. Deshalb bietet die zuvor genannte Ausgestaltung auch den Vorteil, dass die Prädiktionsdaten besonders genau ermittelbar sind.

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
- Figur 1: zeigt eine vorteilhafte Ausgestaltung des Systems in einer schematischen Darstellung.
- Figur 2: zeigt einen Teil eines Schlauchsegments in einer vorteilhaften Ausgestaltung.
- Figur 3: zeigt einen Teil eines Schlauchsegments in einer weiteren, vorteilhaften Ausgestaltung.

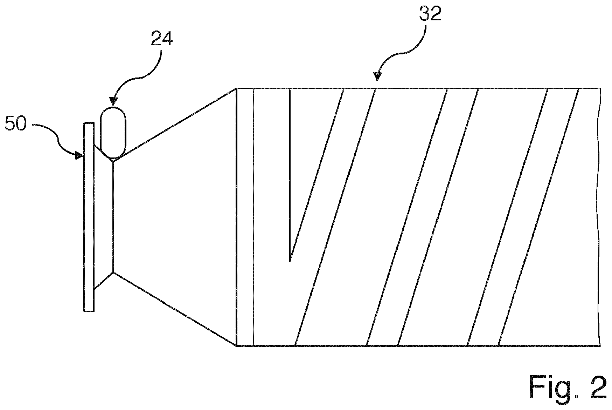

In der Figur 2 ist das System 2 beispielhaft und schematisch dargestellt. Das System 2 umfasst die Basiseinheit 6 und die Schwimmeinheit 4. Die Schwimmeinheit 4 wiederum weist eine Kopplungseinheit 8, einen schwimmfähigen Schwimmschlauch 10 und ein Erfassungssystem 12 auf. Die Kopplungseinheit 8 ist vorzugsweise schwimmfähig. Die Kopplungseinheit 8 kann beispielsweise als eine schwimmfähige Boje 22 ausgestaltet sein. Wenn im Folgenden von der Kopplungseinheit 8 gesprochen wird, so kann damit vorzugsweise die schwimmfähige Boje 22 gemeint sein. Die Kopplungseinheit 8 kann stationär angeordnet sein. So kann die Kopplungseinheit 8 beispielsweise mit Seilen am Meeresboden fixiert sein. Dies gilt insbesondere auch dann, wenn die Kopplungseinheit 8 schwimmfähig ist. Die Fixierung der Kopplungseinheit 8 am Meeresboden kann jedoch auch so ausgestaltet sein, dass sich die Kopplungseinheit 8 in einem gewissen Bereich an der Oberfläche des Wassers im Meer bewegen kann.

Der Schwimmschlauch 10 weist ein erstes Ende 14 und ein zweites Ende 16 auf. Der Schwimmschlauch 10 ist als schwimmfähiger Schlauch ausgeführt. Vorzugsweise ist der Schwimmschlauch 10 von einer Mehrzahl von Schlauchsegmenten 32 gebildet, die hintereinander und miteinander gekoppelt verbunden sind, so dass der Schwimmschlauch 10 einen fluiddichten Kanal, der auch als Schlauchkanal bezeichnet wird, aufweist und/oder bildet. Jedes Schlauchsegment 32 ist schwimmfähig. Das erste Ende 14 des Schwimmschlauchs 10 ist mit der Kopplungseinheit 8 verbunden. Die Kopplungseinheit 8 kann dazu einen Flüssigkeitsausgangsanschluss 36 aufweisen, der zur Ankopplung des ersten Endes 14 des Schwimmschlauchs 10 ausgebildet ist. Außerdem kann die Kopplungseinheit 8 einen Flüssigkeitseingangsanschluss 34 aufweisen, der zur Ankopplung an einen Unterwasserschlauch 48 ausgebildet ist. Außerdem kann ein Fluidkanal zwischen dem Flüssigkeitseingangsanschluss 34 und dem Flüssigkeitsausgangsanschluss 36 gebildet sein, so dass die Kopplungseinheit 8 eine Fluidverbindung zwischen dem ersten Ende 14 des Schwimmschlauchs 10 und dem Unterwasserschlauch 48 bereitstellen bzw. bilden kann.

In der Praxis schwimmen der Schwimmschlauch 10 und die Kopplungseinheit 8 oftmals im Wasser eines Meeres, so dass ein Schiff an das zweite Ende 16 des Schwimmschlauchs 10 heranfahren kann, um das zweite Ende 16 des Schwimmschlauchs 10 anzukoppeln. Daraufhin kann das Schiff ein von dem Unterwasserschlauch 48 zugeführtes Fluid, insbesondere Erdöl, über die Kopplungseinheit 8 und den Schwimmschlauch 10 aufnehmen. Dabei strömt das Fluid von dem Unterwasserschlauch 48 durch die Kopplungseinheit 8 und daraufhin durch den Schwimmschlauch 10 zu dem zweiten Ende 16 des Schwimmschlauchs 10, um sodann in das Schiff zu gelangen. Das Schiff wird vorzugsweise als ein Tankschiff ausgebildet sein. Grundsätzlich besteht jedoch auch die Möglichkeit, dass der Fluidstrom in umgekehrte Richtung erfolgt. So kann Fluid, insbesondere Erdöl, von dem Tankschiff an dem zweiten Ende 16 des Schwimmschlauchs 10 eingespeist werden, so dass das Fluid, insbesondere das Erdöl, durch den Schwimmschlauch 10, die Kopplungseinheit 8 und sodann in den Unterwasserschlauch 48 strömt.

Ist der Austausch von Fluid, insbesondere Erdöl, abgeschlossen, wird das Schiff das zweite Ende 16 des Schwimmschlauchs 10 abkoppeln. Daraufhin schwimmt der Schwimmschlauch 10 zusammen mit der Kopplungseinheit 8 im Wasser des Meeres. Eine Strömung des Wassers und/oder eine Strömung des Winds wirken auf den Schwimmschlauch 10 und die Kopplungseinheit 8. In Abhängigkeit von der Richtung und/oder der Stärke der jeweiligen Strömung wird eine Bewegung des Schwimmschlauchs 10 und/oder der Kopplungseinheit 8 verursacht. Fährt nun ein weiteres Schiff an den Schwimmschlauch 10 heran, so wird der Schwimmschlauch 10 sehr wahrscheinlich nicht mehr an der Stelle sein, an der das vorherige Schiff den Schwimmschlauch 10 abgekoppelt hat. Der Schwimmschlauch 10 kann eine Länge von mehr als 10 m, mehr als 20 m oder mehr als 50 m aufweisen. Durch die Bewegung des Schwimmschlauchs 10 und/oder der Kopplungseinheit 8 kann das zweite Ende 16 des Schwimmschlauchs 10 deshalb sehr weit von der zuvor genannten Stelle entfernt sein. Für das neu ankommende Schiff ist es deshalb von großem Interesse, vorab zu wissen, wo das zweite Ende 16 des Schwimmschlauchs 10 ist und in welche Richtung das zweite Ende 16 des Schwimmschlauchs 10 zeigt. Denn in Abhängigkeit dieser Informationen wird das neu ankommende Schiff die Route zum Ansteuern an das zweite Ende 16 des Schwimmschlauchs 10 vornehmen, so dass das zweite Ende 16 des Schwimmschlauchs 10 an dem neu ankommenden Schiff besonders einfach ankoppelbar ist. Für gewöhnlich wird der Weg eines Schiffs zu dem Schwimmschlauch 10 vorab geplant. Deshalb kann auch vorbestimmt sein, zu welchem zukünftigen, vorbestimmten Zeitpunkt das Schiff an dem Schwimmschlauch 10 ankommen wird. Dieser zukünftige, vorbestimmte Zeitpunkt kann an die Basiseinheit 6 über eine zugehörige Eingangsschnittstelle 42 übertragen werden. Die Eingangsschnittstelle 42 der Basiseinheit 6 kann also zum direkten oder indirekten Empfang von Daten ausgebildet sein, die den zukünftigen, vorbestimmten Zeitpunkt repräsentieren.

Um eine Vorhersage für den geographischen Standort, der auch als Ziel-Standort bezeichnet wird, des Schwimmschlauchs 10 an dem zukünftigen, vorbestimmten Zeitpunkt und/oder eine Vorhersage über die geometrische Anordnung, die auch kurz als geometrische Ziel-Anordnung bezeichnet wird, des Schwimmschlauchs 10 relativ zu der Kopplungseinheit 8 für den zukünftigen, vorbestimmten Zeitpunkt geben zu können, hat es sich als sinnvoll erwiesen, wenn zunächst der aktuelle geographische Standort des Schwimmschlauchs 10 und/oder die aktuelle geometrische Anordnung des Schwimmschlauchs 10 relativ zu der Kopplungseinheit 8 erfasst wird. Darüber hinaus hat es sich als sinnvoll erwiesen, wenn aktuelle Wetterdaten und aktuelle Seedaten verwendet werden, um die Bewegung des Schwimmschlauchs 10 ausgehend von dem aktuellen geographischen Standort und/oder der aktuellen geometrischen Ausrichtung und unter Berücksichtigung der aktuellen Wetterdaten und aktuellen Seedaten zu ermitteln.

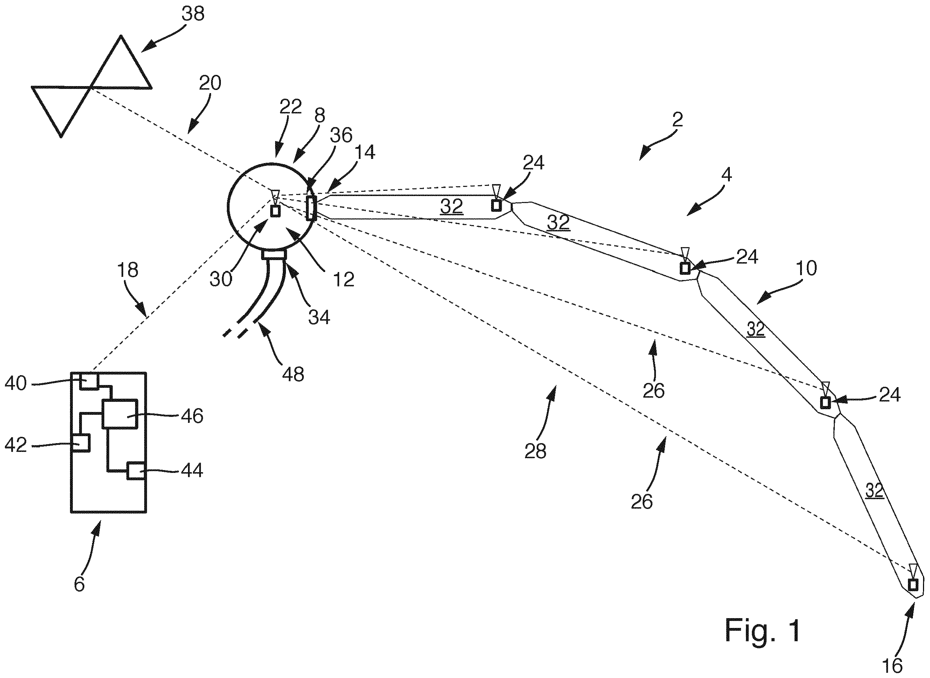

Die Schwimmeinheit 4 weist den Schwimmschlauch 10 und die Kopplungseinheit 8 sowie ein Erfassungssystem 12 auf. Das Erfassungssystem 12 kann mehrteilig ausgestaltet sein. So kann das Erfassungssystem 12 mehrere Knoteneinheiten 24 aufweisen, die verteilt zwischen der Kopplungseinheit 8 und dem zweiten Ende 16 des Schwimmschlauchs 10 angeordnet sind. Eine der Knoteneinheiten 24 kann als Haupteinheit 30 an der Kopplungseinheit 8 befestigt sein. Jede der Knoteneinheiten 24 ist zum Aufbau einer Funkverbindung 26 zu jeweils zwei weiteren der Knoteneinheiten 24 ausgebildet. Für eine bessere Übersicht sind nicht sämtliche Funkverbindungen 26 in Figur 1 dargestellt. Vielmehr sind nur wenige Funkverbindungen 26 durch gestrichelte Linien angedeutet. Durch die Funkverbindungen 26 kann ein Funknetzwerk 28 gebildet sein. Durch die Funkverbindungen 26 bzw. das Funknetzwerk 28 können die Relativdistanzen zwischen den Knoteneinheiten 24 ermittelt werden. Diese Relativdistanzen können von der Haupteinheit 30 gesammelt werden. Basierend auf den Relativdistanzen kann von der Haupteinheit durch Triangulation ermittelt werden, wie die Abstände von der Haupteinheit 30 zu jeder der weiteren Knoteneinheiten 24 ist und in welcher Winkelanordnung die weiteren Knoteneinheiten 24 in Bezug auf die Haupteinheit 30 angeordnet sind. Basierend auf diesen Informationen lässt sich eine geometrische Anordnung des Schwimmschlauchs 10 in Bezug auf die Kopplungseinheit 8 ermitteln. Hierzu kann die Haupteinheit 30 ausgebildet sein. Die Ausgestaltung des Erfassungssystems 12 mit der Mehrzahl der Knoteneinheiten 24, von denen eine der Knoteneinheiten 24 eine Haupteinheit 30 bildet, ist eine mögliche Ausgestaltungsvariante des Erfassungssystems 12. Grundsätzlich bestehen auch andere Ausgestaltungsmöglichkeiten für das Erfassungssystem 12, so dass das Erfassungssystem 12 ausgebildet ist, als eine Ist-Anordnung eine aktuelle geometrische Anordnung des Schwimmschlauchs 10 relativ zu der Kopplungseinheit 8 zu erfassen. So kann das Erfassungssystem 12 beispielsweise zur optischen Erfassung des Schwimmschlauchs 10 mittels eines Bildsensors ausgebildet sein, der an der Kopplungseinheit 8 angeordnet ist. So kann das Erfassungssystem 12 durch Mastererkennung, die geometrische Anordnung des Schwimmschlauchs 10 relativ zu der Kopplungseinheit 8 erfassen. Auch dadurch ist eine aktuelle geometrische Anordnung des Schwimmschlauchs 10 relativ zu der Kopplungseinheit 8 möglich. Diese geometrische Anordnung kann von dem Erfassungssystem 12 als Ist-Anordnung erfasst sein.

Das Erfassungssystem 12 ist außerdem dazu konfiguriert, als aktuellen Ist-Standort einen aktuellen geographischen Standort der Schwimmeinheit 4 zu erfassen und/oder zu ermitteln. So kann das Erfassungssystem 12 beispielsweise zum Empfang von einem Navigationssignal 20 von einem Satelliten 38 ausgebildet sein. Das Erfassungssystem 12 kann außerdem dazu konfiguriert sein, basierend auf dem Navigationssignal 20 den aktuellen geographischen Standort der Schwimmeinheit 4 zu ermitteln. Dieser geographische Standort kann als Ist-Standort bestimmt sein. Insbesondere kann es vorgesehen sein, dass das Navigationssignal 20 von der Haupteinheit 30 des Erfassungssystems 12 erfassbar ist. Außerdem kann es vorgesehen sein, dass die Ermittlung des aktuellen geographischen Standorts basierend auf dem Navigationssignal 20 durch die Haupteinheit 30 ausgeführt wird. Die Haupteinheit 30 kann dadurch zunächst den aktuellen geographischen Standort der Kopplungseinheit 8 ermitteln. Aufgrund der mechanischen Kopplung des Schwimmschlauchs 10 an die Kopplungseinheit 8 kann die Haupteinheit 30 jedoch auch dazu ausgebildet sein, einen aktuellen geographischen Standort für die gesamte Schwimmeinheit 4 zu bestimmen. Alternativ oder ergänzend kann es vorgesehen sein, dass die Haupteinheit 30 dazu ausgebildet und/oder konfiguriert ist, um basierend auf dem Navigationssignal 20 einen aktuellen geographischen Standort des Schwimmschlauchs 10 zu ermitteln. In diesem Fall kann der Haupteinheit 30 die aktuelle Ist-Anordnung des Schwimmschlauchs 10 relativ zu der Kopplungseinheit 8 bekannt sein und diese aktuelle Ist-Anordnung berücksichtigt werden, um basierend hierauf und dem Navigationssignal 20 den aktuellen geographischen Standort des Schwimmschlauchs 10 als Ist-Standort für die Schwimmeinheit 4 zu ermitteln.

Außerdem ist das Erfassungssystem 12 zur Ermittlung von Ist-Standortdaten ausgebildet, die den Ist-Standort und die Ist-Anordnung repräsentieren. Die Ist-Standortdaten können also den aktuellen geographischen Standort und die aktuelle geometrische Anordnung repräsentieren. Die Ermittlung der Ist-Standortdaten kann durch die Haupteinheit 30 des Erfassungssystems 12 ausgeführt werden. Die Haupteinheit 30 kann hierzu ausgebildet und/oder konfiguriert sein.

Die Schwimmeinheit 4 und die Basiseinheit 6 sind über eine Signalverbindung 18 koppelbar ausgebildet. Die Schwimmeinheit 4 und die Basiseinheit 6 sind also vorzugsweise dazu ausgebildet, um eine Signalverbindung 18 herzustellen. Die Basiseinheit 6 kann dazu eine Funkschnittstelle 40 aufweisen. Die Schwimmeinheit 4 kann die Haupteinheit 30 aufweisen, die ebenfalls zum Aufbau der Signalverbindung 18 ausgebildet ist. Diese Signalverbindung 18 dient aber nicht zur Ermittlung der Relativdistanzen. Somit kann die Haupteinheit 30 der Schwimmeinheit 4 und die Funkschnittstelle 40 der Basiseinheit 6 zum Aufbau der Signalverbindung 18 ausgebildet sein. Die Basiseinheit 6 und die Haupteinheit 30 der Schwimmeinheit 4 können also über eine Signalverbindung 18 miteinander gekoppelt sein. Die Schwimmeinheit 4 und insbesondere die zugehörige Haupteinheit 30 ist zur Übertragung der Ist-Standortdaten über die Signalverbindung 18 an die Basiseinheit 6, und insbesondere an die zugehörige Funkschnittstelle 40, ausgebildet. Die Signalverbindung 18 kann also als eine drahtlose Signalverbindung 18 ausgebildet sein. Diese kann also per Funk gebildet sein. Zwischen der Haupteinheit 30 und der Funkschnittstelle 40 kann also ein Signal ausgetauscht werden, das die Ist-Standortdaten repräsentiert. Dadurch kann die Übertragung der Ist-Standortdaten an die Basiseinheit 6 erfolgen. Die Funkschnittstelle 40 kann mit einer Prozessoreinheit 46 der Basiseinheit 6 gekoppelt sein, so dass die Ist-Standortdaten an die Prozessoreinheit 46 übertragbar sind. Die Basiseinheit 6 kann außerdem eine Eingangsschnittstelle 42 aufweisen, die zum Empfang von aktuellen Wetterdaten und aktuellen Seedaten ausgebildet ist. Die aktuellen Wetterdaten werden als Ist-Wetterdaten bezeichnet. Die aktuellen Seedaten werden als Ist-Seedaten bezeichnet. Die Eingangsschnittstelle 42 kann ebenfalls mit der Prozessoreinheit 46 der Basiseinheit 6 gekoppelt sein, so dass die Ist-Wetterdaten und die Ist-Seedaten an die Prozessoreinheit 46 übertragbar sind.

Die Basiseinheit 6 ist also insbesondere über die Eingangsschnittstelle 42 zum Empfang von Ist-Wetterdaten ausgebildet, die die aktuelle Windstärke, die aktuelle Windrichtung, eine Vorhersage über die Windstärke und/oder eine Vorhersage über die Windrichtung jeweils am Ist-Standort repräsentieren. Die Ist-Wetterdaten können über ein Datennetzwerk an die Eingangsschnittstelle 42 übertragen werden. Die Basiseinheit 6 ist vorzugsweise als eine von der Schwimmeinheit 4 entfernt angeordnete Basiseinheit 6 ausgebildet. So kann die Basiseinheit 6 stationär an Land angeordnet sein. Hingegen ist die Schwimmeinheit 4, und vorzugsweise der Schwimmschlauch 10 der Schwimmeinheit 4 schwimmfähig. Die Kopplungseinheit 8 kann ebenfalls schwimmfähig sein. Dies ist jedoch nicht zwingend notwendig. Dennoch wird die Schwimmeinheit 4 aufgrund des zugehörigen, sich als solche bezeichnet.

Die Basiseinheit 6 ist außerdem vorzugsweise über die zugehörige Funkschnittstelle 40 zum Empfang der Ist-Seedaten ausgebildet, die die aktuelle Strömungsstärke des Wassers, die aktuelle Strömungsrichtung des Wassers, eine Vorhersage über die Strömungsstärke des Wassers und/oder eine Vorhersage über die Strömungsrichtung des Wassers repräsentieren. Mit den Ist-Wetterdaten und den Ist-Seedaten werden die Basiseinheit 6 und insbesondere der zugehörigen Prozessoreinheit 46 die Daten zur Verfügung gestellt, die versendet werden können, um eine auf den Schwimmschlauch 10 wirkende Kraft zu ermitteln, die wiederum eine Bewegung des Schwimmschlauchs 10 verursacht. Entsprechendes kann für die Kopplungseinheit 8 gelten. Deshalb können die Ist-Wetterdaten und die Ist-Seedaten auch dazu verwendet werden, um eine Kraft zu bestimmen, die auf die gesamte Schwimmeinheit 4 wirkt, um zu ermitteln, wie die Bewegung der Schwimmeinheit 4 erfolgt. Die Veränderung des Standorts des Schwimmschlauchs 10 und/oder der Kopplungseinheit 8 und somit auch der Schwimmeinheit 4 hängt aber auch von der Zeitdauer ab, mit der das Wasser und/oder der Wind auf den Schwimmschlauch 10 und/oder die Kopplungseinheit 8 wirkt. Um eine Vorhersage in Bezug auf den geographischen Ziel-Standort und/oder die Ziel-Anordnung ermitteln zu können, ist es deshalb bevorzugt vorgesehen, dass der entsprechende, zukünftige, vorbestimmte Zeitpunkt der Basiseinheit 6 zur Verfügung steht oder an diese Basiseinheit 6 übermittelbar ist. Die Eingangsschnittstelle 42 kann deshalb auch zum direkten und/oder indirekten Empfang von Daten ausgebildet sein, die den zukünftigen, vorbestimmten Zeitpunkt repräsentieren. Die Eingangsschnittstelle 42 kann den zukünftigen, vorbestimmten Zeitpunkt auch an die Prozessoreinheit 46 übertragen.

Außerdem ist die Basiseinheit 6 dazu konfiguriert, Prädiktionsdaten basierend auf den Ist-Standortdaten, den Ist-Wetterdaten, den Ist-Seedaten und dem zukünftigen, vorbestimmten Zeitpunkt zu ermitteln, so dass die Prädiktionsdaten eine Vorhersage für den geographischen Ziel-Standort des Schwimmschlauchs 10 an dem zukünftigen, vorbestimmten Zeitpunkt repräsentieren und/oder so dass die Prädiktionsdaten eine Vorhersage für eine geometrische Ziel-Anordnung des Schwimmschlauchs 10 relativ zu der Kopplungseinheit 8 für den zukünftigen, vorbestimmten Zeitpunkt repräsentieren. Dazu kann von der Basiseinheit 6 ein mathematisches Rechenmodell gespeichert sein, das von der Prozessoreinheit 46 ausgeführt werden kann. Die Basiseinheit 6, und insbesondere die zugehörige Prozessoreinheit 46, wird das mathematische Rechenmodell zur Ermittlung der Prädiktionsdaten ausführen. Vorzugsweise ist das mathematische Rechenmodell derart ausgestaltet, dass das mathematische Rechenmodell eine Bewegung der Schwimmeinheit 4, und vorzugsweise allein eine Bewegung des zugehörigen Schwimmschlauchs 10, im Wasser in Abhängigkeit einer Strömungsstärke des Wassers, einer Strömungsrichtung des Wassers, einer Windstärke des Winds über dem Wasser und/oder einer Windrichtung des Winds über dem Wasser abbildet. Um das mathematische Rechenmodell zur Ermittlung der Prädiktionsdaten auszuführen, ist es bevorzugt vorgesehen, dass die Ist-Standortdaten, die Ist-Wetterdaten, die Ist-Seedaten und der zukünftige, vorbestimmte Zeitpunkt Eingangsgrößen für das mathematische Rechenmodell bilden. Eine Ausgangsgröße des mathematischen Rechenmodells kann der geographische Ziel-Standort sein. Eine weitere oder eine alternative Ausgangsgröße des mathematischen Rechenmodells kann die Ziel-Anordnung des Schwimmschlauchs 10 relativ zur Kopplungseinheit 8 sein. Durch die Ausführung des mathematischen Rechenmodells mittels der Prozessoreinheit 46 der Basiseinheit 6 und basierend auf den zuvor erläuterten Eingangsgrößen kann also von der Basiseinheit 6, bzw. der zugehörigen Prozessoreinheit 46, als Ausgangsgröße die Prädiktionsdaten ermittelt werden, so dass die Prädiktionsdaten eine Vorhersage für den geographischen Ziel-Standort des Schwimmschlauchs 10 an dem zukünftigen, vorbestimmten Zeitpunkt repräsentieren und/oder so dass die Prädiktionsdaten eine Vorhersage für eine geometrische Ziel-Anordnung des Schwimmschlauchs 10 relativ zu der Kopplungseinheit 8 für den zukünftigen, vorbestimmten Zeitpunkt repräsentieren.

Das mathematische Rechenmodell kann von einem künstlichen neuronalen Netzwerk oder von einem linearen, mathematischen Rechenmodell gebildet sein. Das künstliche neuronale Netzwerk kann derart trainiert sein, dass die zuvor erläuterte Abbildung zwischen den Eingangsgrößen und den Ausgangsgrößen des mathematischen Rechenmodells gewährleistet ist. Ist das mathematische Rechenmodell hingegen von einem linearen mathematischen Rechenmodell gebildet, so kann dieses Modell basierend auf deterministischen mechanischen Funktionszusammenhängen erstellt worden sein. Die Basiseinheit 6, und insbesondere die zugehörige Prozessoreinheit 46 kann von einer einzelnen Prozessoreinheit 46 gebildet sein. Es ist jedoch grundsätzlich auch möglich, dass die Basiseinheit 6, und insbesondere die zugehörige Prozessoreinheit 46 von einer Rechner-Cloud gebildet ist.

In der Figur 2 ist ein Teil eines Schlauchsegments 32 des Schwimmschlauchs 10 gezeigt. Das Schlauchsegment 32 weist an jedem stirnseitigen Ende einen Anschlussflansch 50 auf. Zwei Schlauchsegmente 32 können somit über die stirnseitig angeordneten Anschlussflansche 50 miteinander verbunden werden. Diese Verbindung kann zusätzlich mit Schrauben hergestellt werden.

Eine vorteilhafte Ausgestaltung des Systems 2 zeichnet sich dadurch aus, dass jedem Schlauchsegment 32 eine Knoteneinheit 24 zugeordnet ist. Die jeweilige Knoteneinheit 24 kann beispielsweise an einem der Anschlussflansche 50 befestigt sein.

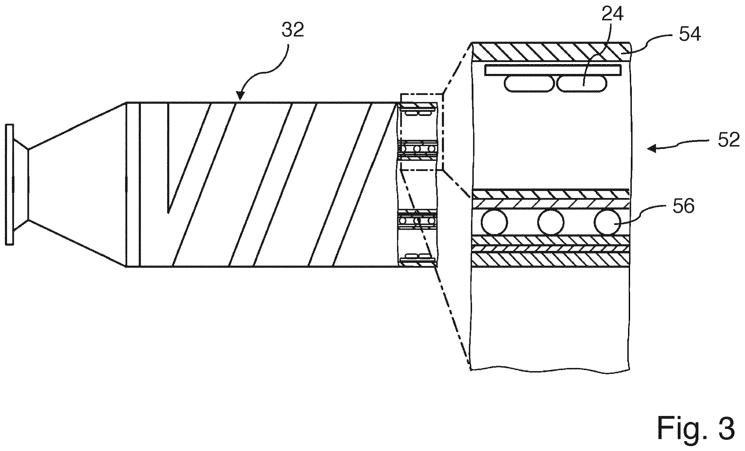

In der Figur 3 ist eine weitere vorteilhafte Ausgestaltung des Teils des Schlauchsegments 32 dargestellt. Dabei wird vergrößert auch ein Querschnitt der Mantelwandung 52 des Schlauchsegments 32 gezeigt. Radial außenseitig kann die Mantelwandung 52 eine äußere Schicht 54 aus Gummimaterial aufweisen. An dem radial innenseitigen Endabschnitt kann ein Festigkeitsträger 56 in das Gummimaterial der Mantelwandung 52 eingebettet sein. Außerdem kann es bevorzugt vorgesehen sein, dass eine Knoteneinheit 24 in das Gummimaterial der Mantelwandung 52 eingebettet ist. Dadurch kann die Knoteneinheit 24 vor äußeren, mechanischen Beschädigungen besonders gut geschützt sein.

Ergänzend sei darauf hingewiesen, dass "aufweisend" keine anderen Elemente oder Schritte ausschließt und "ein" oder "eine" keine Vielzahl ausschließt. Bezugszeichen in den Ansprüchen sind nicht als Einschränkung anzusehen.

### Bezugszeichenliste

- 2: System
- 4: Schwimmeinheit
- 6: Basiseinheit
- 8: Kopplungseinheit
- 10: Schwimmschlauch
- 12: Erfassungssystem
- 14: erstes Ende (des Schwimmschlauchs)
- 16: zweites Ende (des Schwimmschlauchs)
- 18: Signalverbindung
- 20: Navigationssignal
- 22: Boje
- 24: Knoteneinheit
- 26: Funkverbindung
- 28: Funknetzwerk
- 30: Haupteinheit
- 32: Schlauchsegment
- 34: Flüssigkeitseingangsanschluss
- 36: Flüssigkeitsausgangsanschluss
- 38: Satellit
- 40: Funkschnittstelle
- 42: Eingangsschnittstelle
- 44: Ausgangsschnittstelle
- 46: Prozessoreinheit
- 48: Unterwasserschlauch
- 50: Anschlussflansch
- 52: Mantelwandung
- 54: äußere Schicht
- 56: Festigkeitsträger

## Patentansprüche

1. System (2) zum Ermitteln von Prädiktionsdaten, wobei das System (2) aufweist:
eine Schwimmeinheit (4), und
eine von der Schwimmeinheit (4) entfernt angeordnete Basiseinheit (6),
wobei die Schwimmeinheit (4) eine schwimmfähige oder stationäre Kopplungseinheit (8), einen schwimmfähigen Schwimmschlauch (10) und ein Erfassungssystem (12) aufweist,
wobei ein erstes Ende (14) des Schwimmschlauchs (10) mit der Kopplungseinheit (8) verbunden ist,
wobei das Erfassungssystem (12) ausgebildet ist, als Ist-Anordnung eine aktuelle geometrische Anordnung des Schwimmschlauchs (10) relativ zur Kopplungseinheit (8) zu erfassen,
wobei das Erfassungssystem (12) ausgebildet ist, als Ist-Standort einen aktuellen geographischen Standort der Schwimmeinheit (4) zu erfassen und/oder zu ermitteln,
wobei das Erfassungssystem (12) zur Ermittlung von Ist-Standortdaten konfiguriert ist, die den Ist-Standort und die Ist-Anordnung repräsentieren,
wobei die Schwimmeinheit (4) und die Basiseinheit (6) über eine Signalverbindung (18) koppelbar ausgebildet sind,
wobei die Schwimmeinheit (4) zur Übertragung der Ist-Standortdaten über die Signalverbindung (18) an die Basiseinheit (6) ausgebildet ist,
**dadurch gekennzeichnet, dass** die Basiseinheit (6) ausgebildet ist, als Ist-Wetterdaten aktuelle Wetterdaten zu empfangen, die die aktuelle Windstärke, die aktuelle Windrichtung, eine Vorhersage über die Windstärke und/oder eine Vorhersage über die Windrichtung jeweils des Winds am Ist-Standort repräsentieren,
wobei die Basiseinheit (6) ausgebildet ist, als Ist-Seedaten aktuelle Seedaten zu empfangen, die die aktuelle Strömungsstärke, die aktuelle Strömungsrichtung, eine Vorhersage über die Strömungsstärke und/oder eine Vorhersage über die Strömungsrichtung jeweils des Wassers am Ist-Standort repräsentieren, und
wobei die Basiseinheit (6) konfiguriert ist, Prädiktionsdaten basierend auf den Ist-Standortdaten, den Ist-Wetterdaten und den Ist-Seedaten zu ermitteln, so dass die Prädiktionsdaten eine Vorhersage für einen geographischen Ziel-Standort des Schwimmschlauchs (10) an einem zukünftigen, vorbestimmten Zeitpunkt repräsentieren und/oder so dass die Prädiktionsdaten eine Vorhersage für eine geometrische Ziel-Anordnung des Schwimmschlauchs (10) relativ zur Kopplungseinheit (8) für den zukünftigen, vorbestimmten Zeitpunkt repräsentieren.

2. System (2) nach dem vorhergehenden Anspruch, **dadurch gekennzeichnet, dass** das Erfassungssystem (12) zum Empfang eines satellitengestützten, drahtlosen Navigationssignals (20) ausgebildet ist, wobei das Erfassungssystem (12) konfiguriert ist, als Ist-Standort den aktuellen geographischen Standort der Schwimmeinheit (4) basierend auf dem Navigationssignal (20) zu ermitteln.

3. System (2) nach einem der vorhergehenden Ansprüche, **dadurch gekennzeichnet, dass** die Kopplungseinheit (8) von einer schwimmfähigen Boje (22) gebildet ist.

4. System (2) nach einem der vorhergehenden Ansprüche, das Erfassungssystem (12) einen Teil des Schwimmschlauchs (10) und/oder der Kopplungseinheit (8), insbesondere der Boje (22), bildet.

5. System (2) nach einem der vorhergehenden Ansprüche, **dadurch gekennzeichnet, dass** die Basiseinheit (6) eine stationär ausgebildete Basiseinheit (6) ist.

6. System (2) nach einem der vorhergehenden Ansprüche 1 bis 4, **dadurch gekennzeichnet, dass** die Basiseinheit (6) auf einem mobilen Fahrzeug, insbesondere einem Schiff, installiert und/oder angeordnet ist.

7. System (2) nach einem der vorhergehenden Ansprüche, **dadurch gekennzeichnet, dass** die Signalverbindung (18) zumindest teilweise als eine Funkverbindung (26) ausgebildet ist.

8. System (2) nach einem der vorhergehenden Ansprüche, **dadurch gekennzeichnet, dass** von der Basiseinheit (6) ein mathematisches Rechenmodell gespeichert ist, das eine Bewegung der Schwimmeinheit (4), insbesondere des zugehörigen Schwimmschlauchs (10), im Wasser in Abhängigkeit von einer Strömungsstärke des Wassers, einer Strömungsrichtung des Wassers, einer Windstärke des Winds über dem Wasser und/oder einer Windrichtung des Winds über dem Wasser abbildet, wobei die Basiseinheit (6) ausgebildet ist, die Prädiktionsdaten außerdem mittels des Rechenmodells zu ermitteln.

9. System (2) nach dem vorhergehenden Anspruch, **dadurch gekennzeichnet, dass** die Basiseinheit (6) ausgebildet ist, ausgehend von dem Ist-Standort und der Ist-Anordnung, die durch die Ist-Standortdaten repräsentiert sind, eine Bewegung der Schwimmeinheit (4), insbesondere des zugehörigen Schwimmschlauchs (10), mittels des Rechenmodells sowie den Ist-Wetterdaten und Ist-Seedaten, die die Strömungsrichtung, Strömungsstärke, Windrichtung und Windstärke als Eingangsgröße für das Rechenmodell bestimmen, zu dem geographischen Ziel-Standort und/oder der geometrischen Ziel-Anordnung vorhersagend zu ermitteln.

10. System (2) nach einem der vorhergehenden Ansprüche 8 bis 9, **dadurch gekennzeichnet, dass** das mathematische Rechenmodell durch ein künstliches neuronales Netzwerk repräsentiert ist.

11. System (2) nach dem vorhergehenden Anspruch, **dadurch gekennzeichnet, dass** die Basiseinheit (6) ausgebildet ist, ein Trainingsschritt zur Anpassung des neuronalen Netzwerks basierend auf jeweils neu empfangenen Ist-Standortdaten auszuführen.

12. System (2) nach einem der vorhergehenden Ansprüche 8 bis 9, **dadurch gekennzeichnet, dass** das mathematische Rechenmodell durch ein lineares, mathematisches Rechenmodell repräsentiert ist.

13. System (2) nach einem der vorhergehenden Ansprüche, **dadurch gekennzeichnet, dass** die Basiseinheit (6) zumindest teilweise von einer Rechner-Cloud gebildet ist.

14. System (2) nach einem der vorhergehenden Ansprüche, **dadurch gekennzeichnet, dass** die Kopplungseinheit (8), insbesondere die Boje (22), einen Flüssigkeitseingangsanschluss (34) aufweist, der zum Anschluss für einen Unterwasserschlauch (48) ausgebildet ist, wobei die Kopplungseinheit (8), insbesondere die Boje (22), einen Flüssigkeitsausgangsanschluss (36) aufweist, der mit dem ersten Ende (14) des Schwimmschlauchs (10) verbunden ist.

15. System (2) nach dem vorhergehenden Anspruch, **dadurch gekennzeichnet, dass** die Schwimmeinheit (4) eine Mehrzahl von Knoteneinheiten (24) aufweist, die an dem Schwimmschlauch (10) und vorzugsweise der Kopplungseinheit (8), insbesondere der Boje (22), derart befestigt sind, so dass die Knoteneinheiten (24) zwischen der Kopplungseinheit (8), insbesondere der Boje (22), und einem zweiten Ende (16) des Schwimmschlauchs (10) verteilt angeordnet sind, wobei jede Knoteneinheit (24) mittels einer zugehörigen Funkeinheit zum Aufbau jeweils einer Funkverbindung (26) zu jeder von zumindest zwei der weiteren Funkeinheiten der jeweiligen Knoteneinheiten (24) ausgebildet ist, so dass ein Funknetzwerk (28), insbesondere ein Maschen-Funknetzwerk, entsteht, wobei jede Knoteneinheit (24) zur Ermittlung einer Relativdistanz zu jeder über eine Funkverbindung (26) verbunden, weiteren Knoteneinheit (24) basierend auf der j eweiligen Funkverbindung (26) ausgebildet ist, wobei mindestens eine der Knoteneinheiten (24) eine Haupteinheit (30) bildet, die zum Sammeln der von den weiteren Knoteneinheiten (24) ermittelten Relativdistanzen über die Funkverbindungen (26) und/oder das Funknetzwerk (28) ausgebildet ist, und wobei die Haupteinheit (30) basierend auf den gesammelten Relativdistanzen zur Ermittlung der Ist-Anordnung ausgebildet ist, die die aktuelle geometrische Anordnung des Schwimmschlauchs (10) relativ zu der Kopplungseinheit (8), insbesondere der Boje (22), repräsentieren, wobei der Schwimmschlauch (10) vorzugsweise von einer Mehrzahl von in Reihe miteinander gekoppelten Schlauchsegmente (32) gebildet ist, wobei jedes Schlauchsegment (32) zumindest indirekt mit mindestens einer der Knoteneinheiten (24) verbunden ist, und/oder dass jedes Schlauchsegment (32) jeweils eine der Knoteneinheiten (24) umfasst.

## Claims

1. System (2) for ascertaining prediction data, wherein the system (2) has:
a floating unit (4), and
a base unit (6) arranged remote from the floating unit (4),
wherein the floating unit (4) has a buoyant or stationary coupling unit (8), a buoyant floating hose (10) and a detection system (12),
wherein a first end (14) of the floating hose (10) is connected to the coupling unit (8),
wherein the detection system (12) is designed to detect, as actual arrangement, a present geometric arrangement of the floating hose (10) relative to the coupling unit (8),
wherein the detection system (12) is designed to detect and/or ascertain, as actual location, a present geographical location of the floating unit (4),
wherein the detection system (12) is configured to ascertain actual location data which represent the actual location and the actual arrangement,
wherein the floating unit (4) and the base unit (6) are designed to be couplable via a signal link (18),
wherein the floating unit (4) is designed to transmit the actual location data via the signal link (18) to the base unit (6),
**characterized in that**
the base unit (6) is designed to receive, as actual weather data, present weather data which represent the present wind strength, the present wind direction, a prediction of the wind strength and/or a prediction of the wind direction in each case of the wind at the actual location,
wherein the base unit (6) is designed to receive, as actual sea data, present sea data which represent the present current strength, the present current direction, a prediction of the current strength and/or a prediction of the current direction in each case of the water at the actual location, and
wherein the base unit (6) is configured to ascertain prediction data on the basis of the actual location data, the actual weather data and the actual sea data, with the result that the prediction data represent a prediction of a geographical target location of the floating hose (10) at a future, predetermined point in time and/or with the result that the prediction data represent a prediction of a geometric target arrangement of the floating hose (10) relative to the coupling unit (8) for the future, predetermined point in time.

2. System (2) according to the preceding claim, **characterized in that** the detection system (12) is designed to receive a satellite-assisted, wireless navigation signal (20), wherein the detection system (12) is configured to ascertain, as actual location, the present geographical location of the floating unit (4) on the basis of the navigation signal (20).

3. System (2) according to either of the preceding claims, **characterized in that** the coupling unit (8) is in the form of a buoyant buoy (22).

4. System (2) according to any of the preceding claims, the detection system (12) forming part of the floating hose (10) and/or the coupling unit (8), in particular the buoy (22).

5. System (2) according to any of the preceding claims, **characterized in that** the base unit (6) is a stationary base unit (6).

6. System (2) according to any of the preceding Claims 1 to 4, **characterized in that** the base unit (6) is installed and/or arranged on a mobile vehicle, in particular a ship.

7. System (2) according to any of the preceding claims, **characterized in that** the signal link (18) is at least partially in the form of a radio link (26).

8. System (2) according to any of the preceding claims, **characterized in that** a mathematical computational model which maps a movement of the floating unit (4), in particular the associated floating hose (10), in the water depending on a current strength of the water, a current direction of the water, a wind strength of the wind over the water and/or a wind direction of the wind over the water is stored by the base unit (6), wherein the base unit (6) is designed to ascertain the prediction data by means of the computational model as well.

9. System (2) according to the preceding claim, **characterized in that** the base unit (6) is designed to ascertain, as a prediction, on the basis of the actual location and the actual arrangement which are represented by the actual location data, a movement of the floating unit (4), in particular of the associated floating hose (10), by means of the computational model and the actual weather data and actual sea data which determine the current direction, current strength, wind direction and wind strength as input variable for the computational model in respect of the geographical target location and/or the geometric target arrangement.

10. System (2) according to either of the preceding Claims 8 to 9, **characterized in that** the mathematical computational model is represented by an artificial neural network.

11. System (2) according to the preceding claim, **characterized in that** the base unit (6) is designed to implement a training step for adapting the neural network on the basis of in each case newly received actual location data.

12. System (2) according to either of the preceding Claims 8 to 9, **characterized in that** the mathematical computational model is represented by a linear mathematical computational model.

13. System (2) according to any of the preceding claims, **characterized in that** the base unit (6) is at least partially in the form of a computer cloud.

14. System (2) according to any of the preceding claims, **characterized in that** the coupling unit (8), in particular the buoy (22), has a fluid inlet connection (34), which is designed for the connection for an underwater hose (48), wherein the coupling unit (8), in particular the buoy (22), has a fluid outlet connection (36), which is connected to the first end (14) of the floating hose (10).

15. System (2) according to the preceding claim, **characterized in that** the floating unit (4) has a plurality of node units (24), which are fastened to the floating hose (10) and preferably the coupling unit (8), in particular the buoy (22), in such a way that the node units (24) are arranged so as to be distributed between the coupling unit (8), in particular the buoy (22), and a second end (16) of the floating hose (10), wherein each node unit (24) is designed to set up, by means of one associated radio unit, in each case one radio link (26) to each of at least two of the further radio units of the respective node units (24), with the result that a radio network (28), in particular a mesh radio network, is produced, wherein each node unit (24) is designed to ascertain a relative distance from each further node unit (24) which is connected via a radio link (26) on the basis of the respective radio link (26), wherein at least one of the node units (24) forms a main unit (30), which is designed to collect the relative distances ascertained by the further node units (24) via the radio links (26) and/or the radio network (28), and wherein the main unit (30) is designed to ascertain, on the basis of the collected relative distances, the actual arrangement which represents the present geometric arrangement of the floating hose (10) relative to the coupling unit (8), in particular the buoy (22), wherein the floating hose (10) is preferably formed by a plurality of hose segments (32) which are coupled to one another in a row, wherein each hose segment (32) is connected at least indirectly to at least one of the node units (24) and/or each hose segment (32) comprises in each case one of the node units (24).

## Revendications

1. Système (2) permettant d'établir des données de prédiction, le système (2) présentant:
une unité flottante (4), et
une unité de base (6) disposée à distance de l'unité flottante (4),
dans lequel l'unité flottante (4) présente une unité d'accouplement (8) flottable ou
stationnaire, un tube flottant (10) flottable et un système de détection (12),
dans lequel une première extrémité (14) du tube flottant (10) est reliée à l'unité d'accouplement (8),
dans lequel le système de détection (12) est réalisé pour détecter en tant qu'agencement réel un agencement géométrique actuel du tube flottant (10) par rapport à l'unité d'accouplement (8),
dans lequel le système de détection (12) est réalisé pour détecter et/ou établir en tant qu'emplacement réel un emplacement géographique actuel de l'unité flottante (4),
dans lequel le système de détection (12) est configuré pour établir des données d'emplacement réel qui représentent l'emplacement réel et l'agencement réel, dans lequel l'unité flottante (4) et l'unité de base (6) sont réalisées de façon à pouvoir être accouplées par l'intermédiaire d'une liaison de signalisation (18), dans lequel l'unité flottante (4) est réalisée pour transmettre les données d'emplacement réel à l'unité de base (6) par l'intermédiaire de la liaison de signalisation (18),
**caractérisé en ce que**
l'unité de base (6) est réalisée pour recevoir en tant que données météorologiques réelles des données météorologiques actuelles qui représentent la force de vent actuelle, la direction de vent actuelle, une prédiction concernant la force de vent et/ou une prédiction concernant la direction de vent, respectivement du vent à l'emplacement réel,
dans lequel l'unité de base (6) est réalisée pour recevoir en tant que données maritimes réelles des données maritimes actuelles qui représentent la force de courant actuelle, la direction de courant actuelle, une prédiction concernant la force de courant actuelle et/ou une prédiction concernant la direction de courant, respectivement des eaux à l'emplacement réel, et
dans lequel l'unité de base (6) est configurée pour établir des données de prédiction sur la base des données d'emplacement réel, des données météorologiques réelles et les données maritimes réelles de sorte que les données de prédiction représentent une prédiction pour un emplacement cible géographique du tube flottant (10) à un instant prédéterminé futur, et/ou de sorte que les données de prédiction représentent une prédiction pour un agencement géométrique cible du tube flottant (10) par rapport à l'unité d'accouplement (8) pour l'instant prédéterminé futur.

2. Système (2) selon la revendication précédente, **caractérisé en ce que** le système de détection (12) est réalisé pour recevoir un signal de navigation (20) sans fil, assisté par satellite, dans lequel le système de détection (12) est configuré pour établir en tant qu'emplacement réel l'emplacement géographique actuel de l'unité flottante (4) sur la base du signal de navigation (20).

3. Système (2) selon l'une quelconque des revendications précédentes, **caractérisé en ce que** l'unité d'accouplement (8) est formée par une bouée flottable (22).

4. Système (2) selon l'une quelconque des revendications précédentes, dans lequel le système de détection (12) fait partie du tube flottant (10) et/ou de l'unité d'accouplement (8), en particulier de la bouée (22).

5. Système (2) selon l'une quelconque des revendications précédentes, **caractérisé en ce que** l'unité de base (6) est une unité de base (6) réalisée de manière stationnaire.

6. Système (2) selon l'une quelconque des revendications précédentes 1 à 4, **caractérisé en ce que** l'unité de base (6) est installée et/ou disposée sur un véhicule mobile, en particulier un navire.

7. Système (2) selon l'une quelconque des revendications précédentes, **caractérisé en ce que** la liaison de signalisation (18) est réalisée au moins partiellement sous la forme d'une liaison radio (26).

8. Système (2) selon l'une quelconque des revendications précédentes, **caractérisé en ce que** l'unité de base (6) mémorise un modèle de calcul mathématique qui reproduit un mouvement de l'unité flottante (4), en particulier du tube flottant (10) associé, dans l'eau en fonction d'une force de courant des eaux, d'une direction du courant de l'eau, d'une force de vent du vent au-dessus de l'eau et/ou d'une direction de vent du vent au-dessus de l'eau, dans lequel l'unité de base (6) est réalisée pour établir les données de prédiction en outre au moyen du modèle de calcul.

9. Système (2) selon la revendication précédente, **caractérisé en ce que** l'unité de base (6) est réalisée pour établir de manière prédictive en partant de l'emplacement réel et de l'agencement réel qui sont représentés par les données d'emplacement réel un mouvement de l'unité flottante (4), en particulier du tube flottant (10) associé, au moyen du modèle de calcul ainsi que des données météorologiques réelles et des données maritimes réelles qui déterminent la direction de courant, la force de courant, la direction de vent et la force de vent en tant que grandeur d'entrée pour le modèle de calcul, pour l'emplacement géographique cible et/ou l'agencement géométrique cible.

10. Système (2) selon l'une quelconque des revendications précédentes 8 à 9, **caractérisé en ce que** le modèle de calcul mathématique est représenté par un réseau neuronal artificiel.

11. Système (2) selon la revendication précédente, **caractérisé en ce que** l'unité de base (6) est réalisée pour effectuer une étape d'entraînement pour adapter le réseau neuronal sur la base de données d'emplacement réel respectivement nouvellement reçues.

12. Système (2) selon l'une quelconque des revendications précédentes 8 à 9, **caractérisé en ce que** le modèle de calcul mathématique est représenté par un modèle de calcul mathématique linéaire.

13. Système (2) selon l'une quelconque des revendications précédentes, **caractérisé en ce que** l'unité de base (6) est formée au moins partiellement par un cloud ordinateur

14. Système (2) selon l'une quelconque des revendications précédentes, **caractérisé en ce que** l'unité d'accouplement (8), en particulier la bouée (22), présente un raccord d'entrée de liquide (34) qui est réalisé pour raccorder un tuyau sous-marin (48), dans lequel l'unité d'accouplement (8), en particulier la bouée (22), présente un raccord de sortie de liquide (36) qui est relié à la première extrémité (14) du tube flottant (10).

15. Système (2) selon la revendication précédente, **caractérisé en ce que** l'unité flottante (4) présente une pluralité d'unités de noeud (24) qui sont fixées au tube flottant (10) et de préférence à l'unité d'accouplement (8), en particulier à la bouée (22) de telle sorte que les unités de noeud (24) sont réparties entre l'unité d'accouplement (8), en particulier la bouée (22), et une deuxième extrémité (16) du tube flottant (10), dans lequel chaque unité de noeud (24) est réalisée, au moyen d'une unité radio associée, pour établir respectivement une liaison radio (26) avec chacune d'au moins deux des unités de noeud supplémentaires des unités de noeud (24) respectives de façon à créer un réseau radio (28), en particulier un réseau radio maillé, dans lequel chaque unité de noeud (24) est réalisée pour établir une distance relative par rapport à chaque unité de noeud (24) supplémentaire reliée par une liaison radio (26), sur la base de la liaison radio (26) respective, dans lequel au moins l'une des unités de noeud (24) forme une unité principale (30) qui est réalisée pour collecter les distances relatives établies par les unités de noeud (24) supplémentaires par les liaisons radio (26) et/ou le réseau radio (28), et dans lequel l'unité principale (30) est réalisée sur la base des distances relatives accumulées pour établir l'agencement réel qui représente l'agencement géométrique actuel du tube flottant (10) par rapport à l'unité d'accouplement (8), en particulier à la bouée (22), dans lequel le tube flottant (10) est de préférence formé par une pluralité de segments de tube (32) couplés les uns aux autres en série, dans lequel chaque segment de tube (32) est relié au moins indirectement à au moins l'une des unités de noeud (24), et/ou chaque segment de tube (32) comprend respectivement l'une des unités de noeud (24).
